# EUROPEAN PATENT SPECIFICATION

(11) **EP 2 890 193 B1**
(45) Date of publication and mention of the grant of the patent: **23.05.2018**
(21) Application number: 12883235.9
(22) Date of filing: 24.08.2012
(51) Int. Cl.: H04W 72/04, H04W 72/12, H04W 4/00, H04W 88/04

(54) **RADIO COMMUNICATION METHOD, RADIO COMMUNICATION SYSTEM, RADIO BASE STATION, AND RADIO TERMINAL**
FUNKKOMMUNIKATIONSVERFAHREN, FUNKKOMMUNIKATIONSSYSTEM, FUNKBASISSTATION UND FUNKENDGERÄT
PROCÉDÉ DE RADIOCOMMUNICATION, SYSTÈME DE RADIOCOMMUNICATION, STATION DE BASE RADIO ET TERMINAL RADIO

(43) Date of publication of application: 01.07.2015
(73) Proprietor: Fujitsu Limited, Kawasaki-shi, Kanagawa 211-8588 (JP)
(72) Inventor: ITO, Akira, Kawasaki-shi Kanagawa 211-8588 (JP)
(74) Representative: Fenlon, Christine Lesley
(86) International application number: PCT/JP2012/005325
(87) International publication number: WO 2014/030193

(56) References cited:
- WO-A1-2008/114435
- WO-A1-2011/033944
- JP-A- 2003 143 644
- JP-A- 2011 176 549
- US-A1- 2008 207 214
- US-A1- 2009 296 680
- US-A1- 2011 268 004

## Description

### FIELD

The present invention relates to a radio communication method, a radio communication system, a radio base station, and a radio terminal.

### BACKGROUND

In recent years, a discussion on next generation radio communication technologies has been performed to further enhance high speed and high capacity radio communication in a radio communication system such as a mobile phone system (cellular system). For example, a communication standard called Long Term Evolution (LTE) and a communication standard called LTE-Advanced (LTE-A) that is based on an LTE radio communication technology has been proposed by 3rd Generation Partnership Project (3GPP), a standard body.

A recently completed communication standard for 3GPP is Release 10 corresponding to LTE-A, which is a major functional enhancement of Release 8 and Release 9 that correspond to LTE. At present, a discussion has been made toward completion of Release 11 that is a further enhancement of Release 10. "LTE" is hereinafter defined as including other radio communication systems that are enhancements of LTE, as well as LTE and LTE-A, unless otherwise specified.

Discussions of various technologies, among which there is Machine Type Communication (MTC), are included in 3GPP Release 11. MTC is equivalent to so-called Machine-to-Machine (M2M) communication in an LTE system, and indicates a type of communication in which machines exchange information without a human being involved. Specific application examples of MTC include monitoring of meters, such as an electric meter, a gas meter, and a water meter, security monitoring, monitoring of various apparatuses, monitoring over a sensor network and the like.

An MTC terminal, which is a terminal corresponding to MTC, is assumed to have several limited functions compared with a normal mobile phone terminal (a so-called cellular terminal). As one example, in a case where the MTC terminal (such as an electric meter and the like that are installed in a house) is not on the move, there is a likelihood that a handover function with which a normal mobile phone terminal is equipped will be not built into the MTC terminal because the handover function is thought not to be desired. In the MTC terminal, it is considered that it is important to narrow down the handover function in order to satisfy requirements, such as miniaturization of an apparatus, low cost and the like.

Incidentally, there is a case where low power consumption is among the requirements imposed on the MTC terminal. For example, it is desirable that a sensor apparatus (a monitoring apparatus in a farm, a water-level monitoring apparatus in a liver, or the like) on a sensor network, which has to be battery-powered because an external power source is difficult to secure, will be low-powered in order to suppress a batter exchange cost and an operating cost associated with it. Among several methods of suppressing power to be consumed by the MTC terminal, a reduction in transmission power is thought to be effective. This is because that in most cases, the MTC terminal, like the normal mobile phone terminal, is not equipped with advanced information-processing performance and an advanced display function and thus a power reduction effect resulting from the reduction in the transmission power is considered to be relatively great.

However, it is also considered that a problem occurs due to the reduction in the transmission power. In the normal mobile phone terminal, a service area is guaranteed by setting the transmission power to a predetermined value. However, in a case where the transmission power of the MTC terminal is reduced, there is a concern that the service area will not be guaranteed. In other words, there is a concern that the MTC terminal will have to perform communication only within a narrow range such as in the neighborhood of a base station. This is because, if the transmission power is low, a radio signal transmitted by the MTC terminal does not reach the radio base station in a case where the MTC terminal is positioned far away from the radio base station.

Accordingly, in the LTE system, a mechanism by which the MTC terminal has access to the radio base station through the normal mobile phone terminal is considered. As an example of this technology, a technology is known in which the radio communication is performed between the MTC terminal and the mobile phone terminal using a predetermined radio resource different from a radio resource that is used in the radio communication between the mobile phone terminal and the radio base station.

### Citation List

### Patent Literature

PTL 1: Japanese Laid-open Patent Publication No. 2004-23613
PTL 2: Japanese Laid-open Patent Publication No. 7-87011

### Non Patent Literature

NPL 1: 3GPP TS 36.211 V10.4.0 (2011-12)
NPL 2: 3GPP TS 36.212 V10.5.0 (2012-03)
NPL 3: 3GPP TS 36.213 V10.5.0 (2012-03)
NPL 4: 3GPP TR 36.321 V10.5.0 (2012-03)
NPL 5: 3GPP TR 36.331 V10.5.0 (2012-03)

### SUMMARY

### Technical Problem

In the related art, the MTC terminal can have access to the radio base station through the mobile phone terminal. However, in the related art, since the radio communication is performed between the MTC terminal and the mobile phone terminal using a predetermined radio resource different from the radio resource that is used in the radio communication between the mobile phone terminal and the radio base station, there is a problem in that the radio resource between the MTC terminal and the mobile phone terminal is fixed and thus lacks flexibility.

Moreover, the description that results in the problem described above is provided based on the MTC terminal in the LTE system, but the problem can be generalized as occurring in a radio communication terminal (which is referred to as an "inter-terminal communication-intended radio terminal) that can perform communication between terminals, such as a general power saving terminal, a low transmission-power terminal, a normal mobile phone terminal and the like. That is, in the related art, since the radio communication (inter-terminal communication) is performed between the inter-terminal communication-intended radio terminal (the power saving terminal, the low transmission-power terminal, and the mobile phone terminal) and the mobile phone terminal using a predetermined radio resource different from the radio resource that is used in the radio communication between the mobile phone terminal and the radio base station, there is a problem in that the radio resource between the inter-terminal communication-intended radio terminal and the mobile phone terminal is fixed and thus lacks flexibility.

US2009/0296680 discloses a wireless communication method in a traffic system with a roadside device and on-vehicle devices, in which inter-vehicle communication uses inter-vehicle resource specified by the roadside device. US2011/268004 discloses device to device communication links in cellular networks.

An object of the technology in the disclosure, which is created in view of what is described above is to provide a radio communication method, a radio communication system, a radio base station, and a radio terminal that flexibly allocate a radio resource between an inter-terminal communication-intended radio terminal and a mobile phone terminal.

### Solution to Problem

In order to solve the problem described above and accomplish the object, the radio communication method in the disclosure is provided in which a radio base station allocates a second radio resource that is to be used in communication among multiple radio terminals, out of a first radio resource that is prepared for communication between the radio base station and a radio terminal. The invention is defined in the independent claims, to which reference should now be made. Advantageous features are set out in the sub claims.

### Advantageous Effects of Invention

According to one aspect of the radio communication method, the radio communication system, the radio base station, and the radio terminal that are disclosed in the present application, an effect is accomplished in which the radio resource can be flexibly allocated between the inter-terminal communication-intended radio terminal and the mobile phone terminal.

### BRIEF DESCRIPTION OF DRAWINGS

FIG. 1 is a diagram illustrating one example of a sequence of processing steps of transmitting UL data in an LTE system.
FIG. 2 is a diagram illustrating a SchedulingRequestConfig information element in the LTE system.
FIG. 3 is a diagram illustrating an UL grant in the LTE system.
FIGs. 4A to 4C are diagrams illustrating a buffer status report (BSR) in the LTE system.
FIG. 5 is a diagram illustrating one example of a sequence of processing steps of transmitting DL data in the LTE system.
FIG. 6 is a diagram illustrating one example of a sequence of processing steps of transmitting UL user data in a radio communication system according to a first arrangement.
FIG. 7 is a diagram illustrating a SchedulingRequestConfig information element in the radio communication system according to the first arrangement.
FIG. 8 is a diagram illustrating an UL grant in the radio communication system according to the first arrangement.
FIGs. 9A to 9B are diagrams illustrating a buffer status report (BSR) in the radio communication system according to the first arrangement.
FIG. 10 is a diagram illustrating one example of a sequence of processing steps of transmitting the UL user data in the radio communication system according to the first arrangement.
FIG. 11 is a diagram illustrating one example of a sequence of processing steps of transmitting the UL user data in a radio communication system according to a second arrangement.
FIG. 12 is a diagram illustrating one example of a sequence of processing steps of transmitting the UL user data in a radio communication system according to a third arrangement.
FIG. 13 is a diagram illustrating one example of a sequence of processing steps of transmitting the UL user data in a radio communication system according to a fourth arrangement.
FIG. 14 is a diagram illustrating one example of a sequence of processing steps of transmitting DL user data in a radio communication system according to an embodiment.
FIG. 15 is a diagram illustrating one example of a sequence of processing steps of transmitting the DL user data in a radio communication system according to a fifth arrangement.
FIG. 16 is a diagram illustrating one example of a network configuration of the radio communication system according to each arrangement or embodiment.
FIG. 17 is one example of a functional-configuration diagram of a radio base station in the radio communication system according to each arrangement or embodiment.
FIG. 18 is one example of a functional-configuration diagram of a mobile phone terminal in the radio communication system according to each arrangement or embodiment.
FIG. 19 is one example of a functional-configuration diagram of an inter-terminal communication-intended radio terminal in the radio communication system according to each arrangement or embodiment.
FIG. 20 is one example of a hardware-configuration diagram of the radio base station in the radio communication system according to each arrangement or embodiment.
FIG. 21 is one example of a hardware-configuration diagram of the mobile phone terminal in the radio communication system according to each arrangement or embodiment.
FIG. 22 is one example of a hardware configuration diagram of the inter-terminal communication-intended radio terminal in the radio communication system according to each arrangement or embodiment.

### DESCRIPTION OF ARRANGEMENTS AND EMBODIMENT

A radio communication system, a radio terminal, a radio base station, and a radio communication method according to an arrangement or embodiment that are disclosed are described below referring to the drawings. Moreover, for convenience, descriptions are provided according to individual arrangements and the embodiment, but it goes without saying that combinations of the arrangements and embodiment can bring out combination effects and an increase in utility.

### (a) UL User Data Transmission in an LTE System

First, a processing sequence for data communication between a radio base station 1 and a mobile phone terminal 2 in the LTE system is described as a preparation for describing the present arrangement.

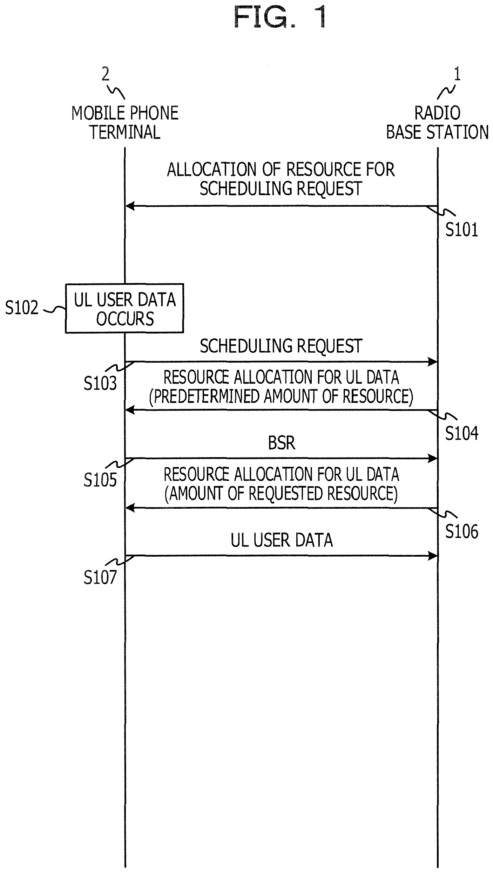

One example of a sequence of processing steps of transmitting uplink (UL) user data in the LTE system is described referring to FIG. 1. In FIG. 1, main steps for the transmission processing of the UL user data are illustrated. Therefore, it is noted that all steps are not described.

Here, to put it differently, "UL" can be referred to as "ascending," and indicates a direction from the mobile phone terminal 2 to the radio base station 1. Furthermore, the "UL user data" indicates user data that is transmitted from the mobile phone terminal 2 to the radio base station 1. Moreover, to put it differently, the user data in the present application can be referred to as higher layer data, application data, or the like, and it is noted that the user data is not necessarily limited to data that is created by a user that is a human being.

Furthermore, when "UL data" is referred to in the present application, the "UL data" is defined as indicating data that is transmitted on a UL data channel. In the LTE system, the UL data transmitted by the physical layer is referred to as a Physical Uplink Shared CHannel (PUSCH). The UL data includes the UL user data in terms of conception. This is because Radio Resource Control (RRC) signaling and the like that will be described below are also included in data that is transmitted on the PUSCH.

First, a description is provided based on the assumption of the processing sequence in FIG. 1. When activated (powered on), the mobile phone terminal 2 is synchronized with one radio base station 1 that is selected by performing so-called cell search, and performs various initial settings for starting to communicating with the radio base station 1. In the initial setting, the radio base station 1 performs resource allocation for scheduling request on the mobile phone terminal 2. Here, in a case where the mobile phone terminal 2 does not transmits the UL data (data to be transmitted is not limited to the UL data), the scheduling request is a signal for requesting the radio base station 1 to allocate (schedule) a UL radio resource for transmitting the UL data.

In S101 in FIG. 1, the radio base station 1 allocates a resource for the scheduling request to the mobile phone terminal 2 and transmits allocation information on the resource for the scheduling request to the mobile phone terminal 2. In the LTE system, the allocation information on the resource for the scheduling request is included in an RRCConnectionSetup message. The RRCConnectionSetup message is one RRC signaling message in the LTE system, and is a signal that is individually transmitted to every mobile phone terminal 2 over a Physical Downlink Shared CHannel (PDSCH) that is a DL data channel from the radio base station 1.

In the LTE system, the RRCConnectionSetup message includes a RadioResourceConfigDediacated information element. Furthermore, the RadioResourceConfigDediacated information element includes a PhysicalConfigDedicated information element. Additionally, the PhysicalConfigDedicated information element includes a SchedulingRequestConfig information element. The SchedulingRequestConfig information element includes a UL resource for the scheduling request.

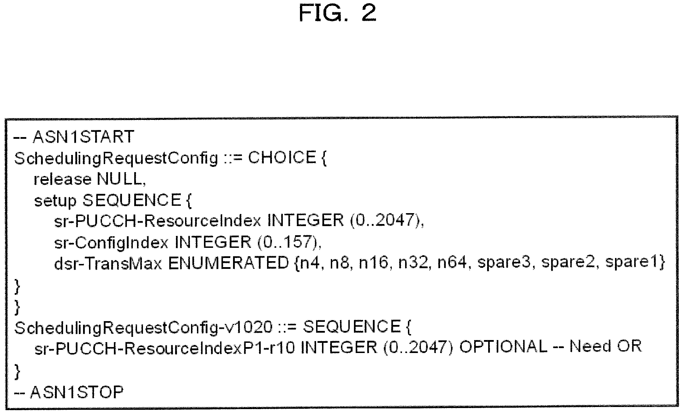

FIG. 2 illustrates the SchedulingRequestConfig information element in the LTE system. The SchedulingRequestConfig information element is associated with setting up the UL radio resource for the scheduling request and includes three pieces of information (parameters), that is, sr-PUCCH-ResourceIndex, sr-ConfigIndex, and dsr-TransMax. A radio resource for the scheduling request is specified by the sr-ConfigIndex and the sr-PUCCH-ResourceIndex. The sr-ConfigIndex indicates a subframe with which the mobile phone terminal 2 can transmit the scheduling request. More specifically, with a value of the sr-ConfigIndex, it is determined which frame (1 millisecond in LTE) the mobile phone terminal 2 can use and how many frames the mobile phone terminal 2 can use at a time, when transmitting the scheduling request. Additionally, the sr-PUCCH-ResourceIndex indicates a resource element onto which the mobile phone terminal 2 maps the scheduling request in a subframe that is indicated based on the sr-ConfigIndex. The resource element onto which the mobile phone terminal 2 maps the scheduling request is a resource within a Physical Uplink Control CHannel (PUCCH) that is a UL control channel. In other words, the scheduling request is transmitted and received over the PUCCH. The dsr-TransMax indicates timing of releasing of the setting up of the radio resource for the scheduling request.

In this manner, the radio resource for the scheduling request is a radio resource for periodic UL. This is because it is now known when the UL data occurs in the mobile phone terminal 2. When the UL data occurs, the mobile phone terminal 2 can transmit the scheduling request to the radio base station 1 using any radio resource of the periodic UL for the scheduling request.

Moreover, an amount of resource is not indicated in the resource allocation for scheduling request. This is because the amount of radio resource for the scheduling request is a predetermined amount of resource. Furthermore, the predetermined amount of resource is minute. This is because the scheduling request is a signal only for telling that the mobile phone terminal 2 transmits the UL data to the radio base station 1.

Referring back to FIG. 1, in S101, the mobile phone terminal 2 is described as receiving the allocation information on the resource for the scheduling request, which is transmitted by the radio base station 1. Accordingly, the mobile phone terminal 2 recognizes the UL radio resource for the scheduling request and completes a preparation for the UL user data transmission.

Next, in S102, the UL user data is defined as occurring in the mobile phone terminal 2. For example, in a case where the Web is accessed from the mobile phone terminal 2 and the like, the UL user data occurs. The UL user data is temporarily stored in a transmission buffer within the mobile phone terminal 2.

Next, in S103, the mobile phone terminal 2 transmits the scheduling request to the radio base station 1 using the resource for the scheduling request that is allocated in S101. More specifically, in any periodic subframe that is indicated with the sr-ConfigIndex, the mobile phone terminal 2 maps the scheduling request onto the resource element (which correponds to the PUCCH) that is indicated with the sr-PUCCH-ResourceIndex and transmits mapping results to the radio base station 1.

Next, in S104, in response to the scheduling request in S103, the radio base station 1 performs the resource allocation for the UL data with respect to the mobile phone terminal 2, and transmits allocation information on the resource for the UL data to radio terminal. The UL radio resource that is allocated in S104 is a comparatively small predetermined amount of resource that the mobile phone terminal 2 uses in order to transmit a Buffer Status Report (BSR) to the radio base station 1. At this point, because the radio base station 1 does not recognize a size of the UL user data that the mobile phone terminal 2 wants to transmit, it is difficult for the radio base station 1 to allocate a sufficient amount of resource that is desired to transmit the UL user data. Accordingly, the radio base station 1 first reports the size of the data (including the UL data) within the transmission buffer to the mobile phone terminal 2.

In the LTE system, the allocation information on the resource for the UL data corresponds to a format 0 of Downlink Control Information (DCI) that is DL control information. Because the format 0 of the DCI is also referred to as a UL Grant, the allocation information on the resource for the UL data is hereinafter referred to as the UL Grant. The UL Grant is transmitted over Physical Downlink Control CHannel (PDCCH) that is a DL control channel.

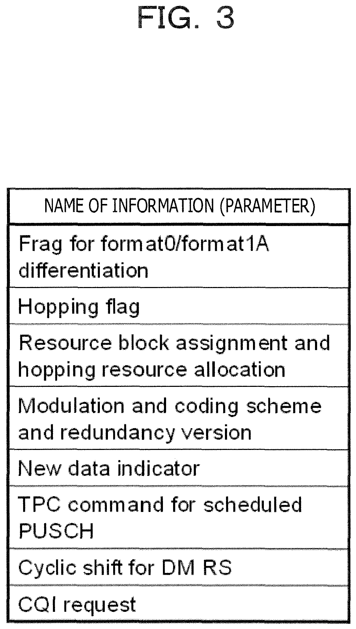

FIG. 3 illustrates the UL grant in the LTE system. The UL Grant being illustrated in FIG. 3 is one that is available in a case where the LTE system employs the Frequency Division Duplex (FDD), but is mostly the same one as in a case where the Time Division Duplex (TDD) is employed. As illustrated in FIG. 3, several pieces of information (parameters) are included in the UL grant. Among the pieces of information, "Resource block assignment and hopping resource allocation" is information indicating a resource block that is the resource for the UL data allocated to the mobile phone terminal 2. Here, the resource block is that is acquired by dividing the subframe into a frequency component and the time component, and is a unit resource that is greater than the resource element. In the present application, descriptions of other pieces of information that are included in the UL grant are omitted.

Referring back to FIG. 1, in S104, the mobile phone terminal 2 receives the allocation information on the resource for the UL data transmitted by the radio base station 1. Next, in S105, in response to the allocation information (UL Grant) on the resource for the UL data, which is received in S104, the radio terminal transmits the BSR to the radio base station 1 using the UL resource (which corresponds to the PDSCH) that is indicated by the allocation information on the resource for the UL data. In the LTE system, the resource block that is indicated by the "Resource block assignment and hopping resource allocation" in the UL grant is determined as one that is present in the fourth subframe from the subframe with which the UL grant is transmitted. For this reason, in the fourth UL subframe from a DL subframe corresponding to the received UL grant, the radio terminal sends the BSR in a state of being mapped onto the resource block that is indicated by the "Resource block assignment and hopping resource allocation" in the UL grant.

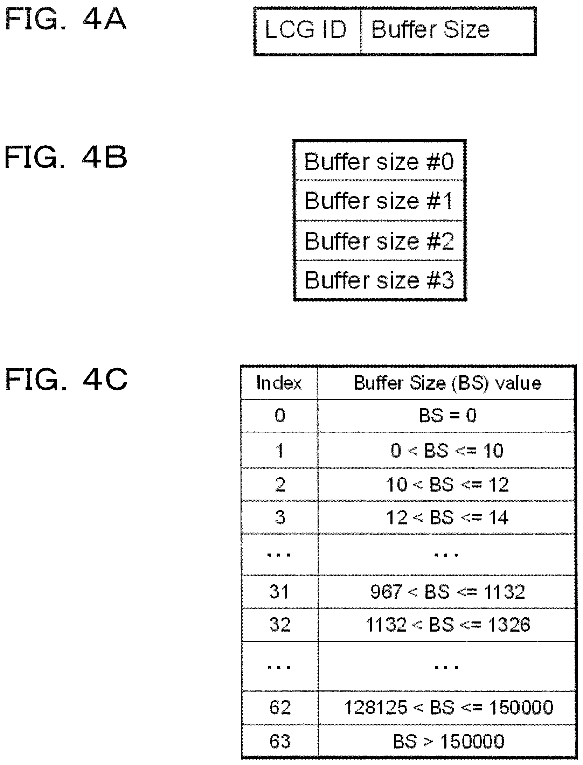

FIG. 4 illustrates the BSR in the LTE system. There are two types of BSR: a short BSR and a long BSR. The mobile phone terminal 2 can selectively use these. FIG. 4A illustrates the short BSR. FIG. 4B illustrates the long BSR. One mobile phone terminal 2 can have four transmission buffers, but with the short BSR, only one buffer size (buffer size value) can be transmitted. On the other hand, with the long BSR, four buffer sizes can be transmitted.

FIG. 4C is a table containing the buffer sizes in the LTE system. The table is shared in advance between the radio base station 1 and the mobile phone terminal 2. As illustrated in FIG. 4C, a value of the buffer size in the BSR is quantized in 6 bits. Based on the table in FIG. 4C, the mobile phone terminal 2 acquires a quantization value (index) corresponding to a data size (buffer size value) within the transmission buffer. Then, the mobile phone terminal 2 transmits the index in a state of being stored in the BSR. For example, in a case where a size of the transmission buffer is 1,000 bytes, the mobile phone terminal 2 transmits index = 31 in a state of being stored in the BSR to the radio base station 1. On the other hand, based on the table in FIG. 4C, the radio base station 1 also can acquire the data size (data range) within the transmission buffer of the mobile phone terminal 2 from the index stored in the BSR.

Referring back to FIG. 1, in S105, the radio base station 1 receives the BSR received by the mobile phone terminal 2. Next, in S106, in response to the BSR in S105, based on the BSR, the radio base station 1 performs the resource allocation for the UL data on the mobile phone terminal 2, and transmits the allocation information on the resource for the UL data to the mobile phone terminal 2. In S106, for the allocation information on the resource for the UL data, the UL grant is used.

The UL radio resource (which corresponds to the PUSCH) for the UL data, which is allocated in S106, is a UL radio resource of which a size is based on the buffer size (quantization value) stored in the BSR. In other words, in S106, the radio base station 1 allocates to the mobile phone terminal 2 an amount of radio resource that is requested for the UL user data transmission. In the allocation of the resource for the UL data by the radio base station 1, in addition to the BSR, a UL channel state (UL reception quality) and the like are also considered, but details of them are omitted.

Last, in S107, the mobile phone terminal 2 responds to the allocation information on the resource for the UL data, which is received in S106, and transmits the UL user data to the radio base station 1 using the resource for the UL data (which corresponds to the PUSCH), which is indicated by the allocation information on the resource for the UL data. In S107, based on the resource for the UL data allocated in S106, the radio base station 1 receives the UL user data. When performed as described above, the transmission processing of the UL user data is completed.

### (b) Transmission of the DL User Data in the LTE System

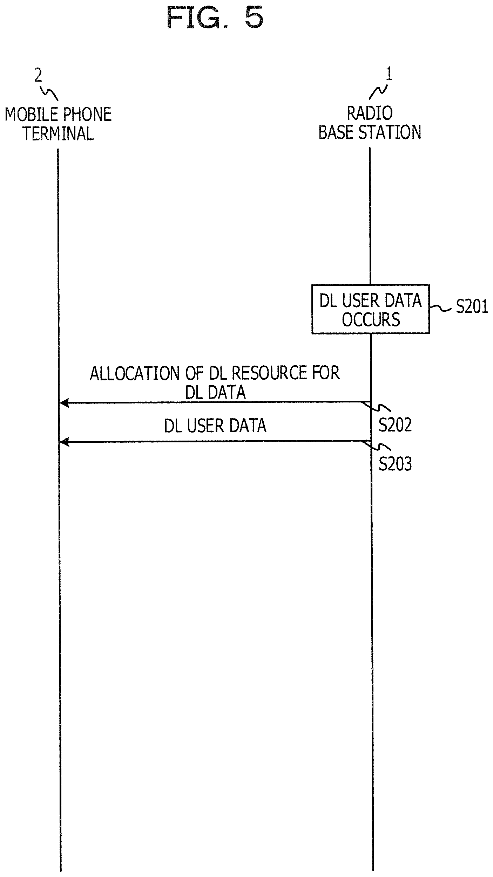

Next, referring to FIG. 5, one example of a sequence of processing steps of transmitting downlink (DL) user data in the LTE system is described. In FIG. 5, main steps relating to the transmission process of the DL user data are described. Therefore, it is noted that all steps are not described.

Here, to put it differently, "DL" can be referred to as "descending," and indicates a direction from the radio base station 1 to the mobile phone terminal 2. The "DL user data" indicates user data that is transmitted from the radio base station 1 to the mobile phone terminal 2. Furthermore, when "DL data" is referred to in the present application, the "DL data" is defined as indicating data that is transmitted on a DL data channel. In the LTE system, the DL data transmitted by the physical layer is referred to as a Physical Downlink Shared CHannel (PDSCH). The DL data includes the DL user data in terms of conception. This is because the Radio Resource Control (RRC) signaling and the like are also included in data that is transmitted on the PDSCH.

In the transmission of the DL user data being illustrated in FIG. 5, like in the transmission of the UL user data being illustrated in FIG. 1, the scheduling request from the mobile phone terminal 2 to request to the radio base station 1 is not desired. This is because the radio base station 1 can recognize an occurrence of the DL user data by itself. Furthermore, in FIG. 5, as in FIG. 1, the transmission of the BSR from the mobile phone terminal 2 to the radio base station 1 also is not desired. This is because the radio base station 1 can recognize a size of the DL user data by itself. For these reasons, transmission processing of the DL user data being illustrated in FIG. 5 is greatly simplified compared with the transmission processing of the UL user data being illustrated in FIG. 1.

First, a description is provided based on the assumption of the processing sequence in FIG. 5. Like in FIG. 1, when activated (powered on), the mobile phone terminal 2 is synchronized with one radio base station 1 that is selected by performing so-called cell search, and performs various initial settings for starting to communicating with the radio base station 1. In the initial setting, the radio base station 1 performs the allocation of the UL resource for a Channel Quality Indicator (CQI) report on the mobile phone terminal 2. Here, the CQI is information indicating DL channel quality (quality of the receiving of the DL radio signal). The mobile phone terminal 2 acquires the CQI by measuring quality of the receiving of a reference signal (RS) that is periodically included in the DL radio signal, and reports the acquired CQI to the radio base station 1 using the resource for the CQI report that is allocated in advance. Based on the CQI reported by the mobile phone terminal 2, the radio base station 1 determines a resource for the DL data (frequency component) that is allocated when the DL data is transmitted to the mobile phone terminal 2, or a modulation and coding scheme (MCS) that is applied to the DL data.

The processing sequence in FIG. 5 is described. In S201, the DL user data is defined as occurring in the radio base station 1. For example, the DL user data occurs in a case where a Web page transmitted from a server on the Internet is transmitted to the mobile phone terminal 2, and the like. The DL user data is temporarily stored in the transmission buffer within the radio base station 1.

In S202, the radio base station 1 allocates the resource for the DL data (which corresponds to the PDSCH), which is for transmitting the DL user data, to the mobile phone terminal 2, and transmits allocation information on the resource for the DL data to the mobile phone terminal 2. As described above, since the radio base station 1 can recognize the size of the DL user data by itself, the radio base station 1 allocates the resource for the DL data based on the size. Furthermore, as described above, the CQI report, that is, DL channel quality (quality of the receiving for the DL) and the like are also considered in the allocation of the resource for the DL data. In the LTE system, the pieces of allocation information on the resource for the DL data correspond to downlink control information (DCI) formats 1A, 1B, 1C, 1D, 2, 2A, 2B, and 2C, respectively. The formats differ in terms of a rule for the resource allocation and the like. Each of the DCI formats 1A, 1B, 1C, 1D, 2, 2A, 2B, and 2C that are the pieces of allocation information on the resource for the DL data includes the resource for the DL data in the same as does the format 0 of the DCI (UL Grant) that is the allocation information on the resource for the UL data being illustrated in FIG. 3. Here, details of each of the DCI formats 1A, 1B, 1C, 1D, 2, 2A, 2B, and 2C are omitted. In S202, the mobile phone terminal 2 receives the allocation information on the resource for the DL data from the radio base station 1.

Then, in S203, the radio base station 1 transmits the DL user data to the mobile phone terminal 2 using the resource for the DL data (which corresponds to the PDSCH), which is allocated in S202. Then, the mobile phone terminal 2 receives the DL user data based on the allocation information on the resource for the DL data, which is received in S202.

Moreover, in the LTE system, the pieces of DL data that correspond to the pieces of allocation information on the resource for the DL data (DCI formats 1A, 1B, 1C, 1D, 2, 2A, 2B, and 2C) are transmitted using the same subframe. In other words, in S202 and S203, the transmission is performed with the same subframe (1 millisecond in LTE). However, the DCI is mapped onto a data channel PDCCH that is arranged in a leading portion of the subframe, and the DL data is mapped onto a control channel PDSCH is arranged in the rear of the leading portion. For this reason, as illustrated in FIG. 5, the mobile phone terminal 2 first receives the allocation information (DCI) on the resource for the DL data (S202) and, based on the received DL resource information, receives the DL user data (S203). When performed as described above, the transmission processing of the DL user data is completed.

Arrangements and the embodiment in the present application will be sequentially described below. According to first to fourth arrangements, the UL user data transmission is realized. According to the first embodiment and fifth arrangement, the DL user data transmission is realized. In the present application, the arrangements according to which the UL user data transmission is realized and the arrangement and embodiment according to which the DL user data transmission is realized can be arbitrarily combined. As one example, the radio communication system can be realized according to a combination of the first arrangement and the embodiment. In the radio communication system, the UL user data transmission is realized according to the first arrangement, and the DL user data transmission is realized according to the embodiment. The present application is not limited to this example, and discloses all arrangements and embodiments that are obtained by arbitrarily combining the arrangements to be described, according to which the UL user data transmission is realized and the embodiment, to be described, according to which the DL user data transmission is realized.

### (c) First Arrangement

According to the first arrangement, the transmission processing of the UL user data is realized.

First, matters are described that are common among the arrangements and the embodiment in the present application. According to the arrangements and the embodiment in the present application, the radio base station 1, the mobile phone terminal 2, and an inter-terminal communication-intended radio terminal 3 are present. For convenience in description, a communication section between the radio base station 1 and the mobile phone terminal 2 (communication link) is hereinafter referred to as a first section and a communication section (communication link) between the mobile phone terminal 2 and the inter-terminal communication-intended radio terminal 3 as a second section. Moreover, in a case where a distance between the radio base station 1 and the inter-terminal communication-intended radio terminal 3 is short and the like, it is considered that these perform the communication without involving the mobile phone terminal 2, but in such a case, normal communication between the radio base station 1 and the mobile communication terminal 2 is not changed. Thus, the communication without involving the mobile phone terminal 2 is not considered in the present application.

Any one of the arrangements or the embodiment in the present application is defined as being based on the following assumption, unless otherwise specified. Based on based on LTE standards, the transmission and the receiving between the radio base station 1 and the mobile phone terminal 2 are performed using the radio resource (frequency band) that is prepared in the radio base station 1. Furthermore, as a radio communication scheme between the radio base station 1 and the mobile phone terminal 2, a scheme is employed that is based on the LTE standard.

On the other hand, the data communication between the mobile phone terminal 2 and an ITC terminal is defined as being usually performed using the radio resource (frequency band) dedicated to the communication between terminals, which is determined in advance, in such a manner that overlapping of the radio resource prepared in the radio base station 1 does not take place. As one example of the radio resource dedicated to the communication between terminals, the radio resource (frequency band) that is used in accordance with the standard for the radio local area network (LAN) such as WiFi (a registered trademark) can be used. Furthermore, as one example of the radio communication scheme between the mobile phone terminal 2 and the inter-terminal communication-intended radio terminal 3, a scheme can be employed that is based on the standard for the radio LAN such as WiFi (a registered trademark).

However, in a predetermined case, the radio communication system according to the arrangement or embodiment in the present application can perform the data communication between the mobile phone terminal 2 and the ITC terminal using the radio resource that is prepared in the radio base station 1. Here, the "predetermined case" is not a normal case, and for example, can be defined as a case (a case where congestion takes place and the like) where the resource dedicated to the communication between terminals is in short supply. Furthermore, as the radio communication scheme between the mobile phone terminal 2 and the inter-terminal communication-intended radio terminal 3, as usual, a scheme can be employed that is based on the standard for the radio LAN such as WiFi (a registered trademark). What is described above is the assumption for each of the arrangements and the embodiment.

Accordingly, the radio communication system according to each of the arrangements and the embodiment in the present application can perform data communication between the mobile phone terminal 2 and the ITC terminal using the resource dedicated to the communication between terminals in a normal case, and can perform the data communication using the radio resource that the radio base station 1 is requested to allocate, in a case where the resource dedicated to the communication between terminals is in short supply and the like. Furthermore, even though any one of the radio resources is used, a communication scheme between the mobile phone terminal 2 and the ITC terminal does not have to be changed. For this reason, the ITC terminal according to the arrangement or embodiment in the present application can be realized without making a great change due to the ITC terminal that is assumed to be the ITC terminal according to the arrangement or embodiment in the present application.

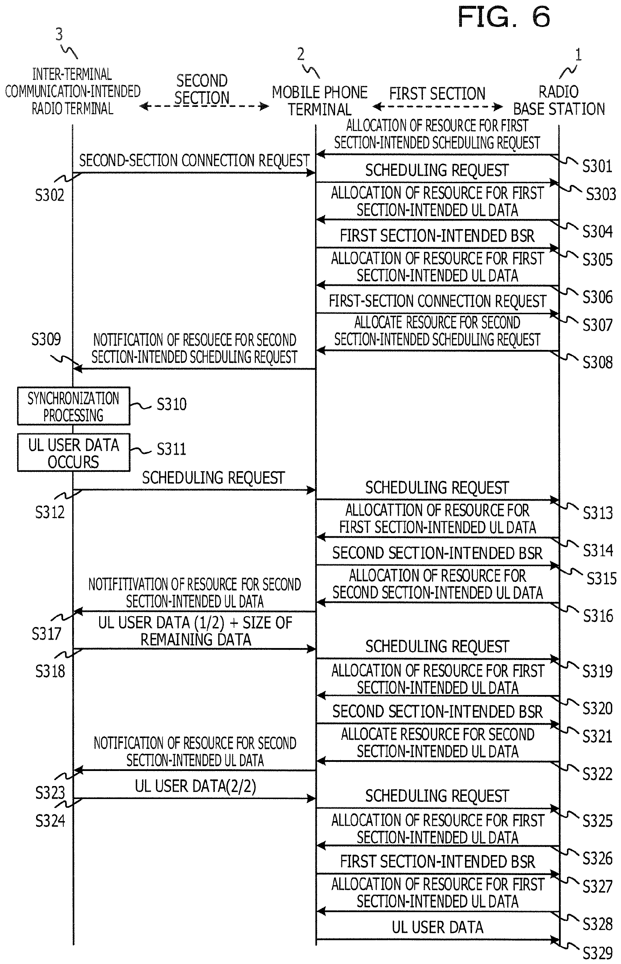

From now on, one example of a sequence of processing steps of transmitting the UL user data according to the first arrangement is described referring to FIG. 6. In FIG. 6, main steps relating to the transmission of the UL user data are described. Therefore, it is noted that all steps are not described.

Like in FIG. 1, in FIG. 6, when activated (powered on), the mobile phone terminal 2 is synchronized with one radio base station 1 that is selected by performing so-called cell search, and performs various initial settings for starting to communicating with the radio base station 1. S301 in FIG. 6 is equivalent to the initial setting.

In S301 in FIG. 6, the radio base station 1 allocates a resource for the first section-intended scheduling request to the mobile phone terminal 2 and transmits allocation information on the resource for the first section-intended scheduling request to the mobile phone terminal 2.

Incidentally, according to the first arrangement, as described below, there is a desire to prepare the allocation information on the resource for the second section-intended scheduling request in order to make a request for the scheduling also for the second section. Here, in LTE in FIG. 2, the SchedulingRequestConfig information element, as it is, is assumed to be used as the allocation information on the resource for the first section-intended scheduling request and the allocation information on the resource for the second section-intended scheduling request. Even in such a case, because two types of allocation information on the resource for the scheduling request differs in terms of a place where the transmission is performed, it is considered to what extent the mobile phone terminal 2 can identify the two types of allocation information on the resource for the scheduling request. However, a case where the overlapping places are present, and the like are not desirable because there remains a concern that the mobile phone terminal 2 will not clearly identify the two type of allocation information on the resource for the scheduling request. Accordingly, one portion of the SchedulingRequestConfig information element in LTE that is assumed as described above can be changed to be used as the allocation information on the resource for the scheduling request according to the first arrangement.

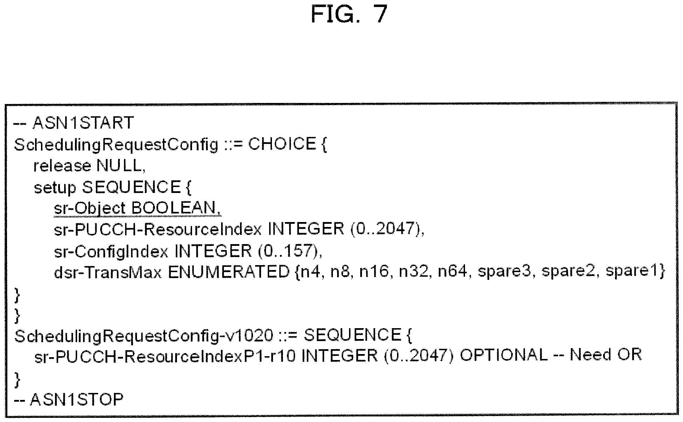

FIG. 7 illustrates one example of the SchedulingRequestConfig information element according to the first arrangement. The SchedulingRequestConfig information element being illustrated in FIG. 7 is an element to which information (a parameter), sr-Object (an underlined portion), is added, compared with that being illustrated in FIG. 2. The sr-Object is information indicating whether the resource for the scheduling request that is set by the SchedulingRequestConfig information element is intended for the first section or is intended for the second section. Here, the sr-Object is one-bit information (BOOLEAN). In a case where the resource for the scheduling request is intended for the first section, the sr-Object can be set to 0, and in a case where the resource for the scheduling request is intended for the second section, the sr-Object can be set to 1. Accordingly, it is possible for the mobile phone terminal 2 to easily identify the two types of allocation information on the resource for the scheduling request.

Referring back to FIG. 6, in S301, allocation information on radio resource for the first section-intended scheduling request can be defined as setting the sr-Object to 0 in the SchedulingRequestConfig information element in FIG. 7.

Next, the inter-terminal communication-intended radio terminal 3 performs processing of establishing a connection to a network through the mobile phone terminal 2. The connection processing corresponds to S302 to S310 in FIG. 6.

In S302, the inter-terminal communication-intended radio terminal 3 transmits a second-section connection request to the mobile phone terminal 2. The second-section connection request can be defined as including an identifier of the inter-terminal communication-intended radio terminal 3. As the identifier of the inter-terminal communication-intended radio terminal 3, a media access control (MAC) address can be used that is a physical identifier (physical address) that is uniquely assigned to an apparatus on the network. The second-section connection request can be transmitted using the radio resource dedicated to the connection between terminals, which is allocated in advance for the communication between the mobile phone terminal 2 and the inter-terminal communication-intended radio terminal 3. Moreover, in S302, instead of transmitting the second-section connection request in the second section, a user may input information equivalent to the second-section connection request to the mobile phone terminal 2.

In S303 to S307 in FIG. 3, the mobile phone terminal 2 transmits a first-section connection request to the radio base station 1 based on the second-section connection request received in S302. The first-section connection request can be defined as including the identifier of the inter-terminal communication-intended radio terminal 3, which is making a request for the second-section connection. The first-section connection request is one type of UL data. For this reason, S303 to S307 that are processing steps of transmitting the first-section connection request may be performed along with S203 to S207 that are processing steps in FIG. 5 that are general processing steps of transmitting the UL data, and the following two points have to be taken into consideration.

The first point to consider is associated with the allocation information on the resource for the UL data, which is transmitted and received in S304 and S306 in FIG. 6. According to the first arrangement, in order that the resource for the UL data can be not only allocated for the first section as in the related art, but can be allocated also for the second section as will be described below, the allocation information on the resource for the second section-intended UL data has to be prepared. Therefore, two types of allocation information on the resource for the UL data according to the first arrangement are available. One is the allocation information on the resource for the first section-intended UL data, and the other is the allocation information on the resource for the second section-intended UL data. The allocation information on the resource for the first section-intended UL data is equivalent to the allocation information on the resource for the UL data in the related art, and is information for indicating the UL resource that is used in transmitting the UL data in the first section. In contrast, the allocation information on the resource for the second section-intended UL data is information for indicating the UL resource that is used in transmitting the UL data in the second section.

Here, when the allocation information on the resource for the UL data (UL Grant) in LTE in the related art, which is illustrated in FIG. 3, as it is, is used as the allocation information on the resource for the first section-intended UL data and the allocation information on the resource for the second section-intended UL data, there is a concern that two pieces of allocation information on the resource for the UL data will not be identified due to the mobile phone terminal 2. For this reason, it is not desirable to use the allocation information the resource for the UL data (UL Grant) in such a manner. This is because when the mobile phone terminal 2 receives the allocation information on the resource for the UL data, the mobile phone terminal 2 has to perform "transmitting" based on the UL resource in a case where the allocation information on the resource for the UL data is intended for the first section, while the mobile phone terminal 2 has to perform "receiving" based on the UL resource in a case where the allocation information on the resource for the UL data is intended for the second section. Accordingly, one portion of the allocation information on the resource for the UL data (UL Grant) in LTE in the related art can be changed to be used as the allocation information on the resource for the UL data according to the first arrangement.

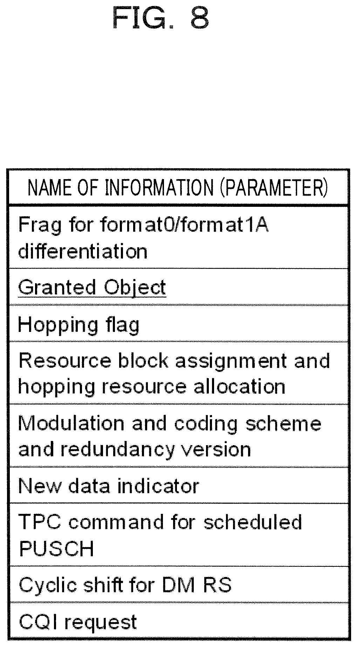

FIG. 8 illustrates one example of the allocation information on the resource for the UL data (UL Grant) according to the first arrangement. The allocation information on the resource for the UL data being illustrated in FIG. 8 is information to which information (a parameter), Granted Object (an underlined portion), is added, compared with that being illustrated in FIG. 3. The Granted Object is information indicating whether the allocation information on the resource for the UL data is intended for the first section or is intended for the second section. Here, the Granted Object is one-bit information (BOOLEAN). In a case where the allocation information on the resource for the UL data is intended for the first section, the Granted Object can be set to 0, and in a case where the allocation information on the resource for the UL data is intended for the second section, the Granted Object can be set to 1. Accordingly, it is possible for the mobile phone terminal 2 to easily identify two types of allocation information on the resource for the UL data.

The allocation information on the resource for the first section-intended UL data in S304 and S306 in FIG. 6, can be defined as setting the Granted Object to 0 in the UL Grant being illustrated in FIG. 8.

The second point to consider is associated with the BSR that is transmitted and received in S305 in FIG. 6. According to the first arrangement, in order that the resource for the UL data can be not only allocated for the first section as in the related art, but can be allocated also for the second section as will be described below, the second section-intended BSR has to be prepared. Therefore, two types of BSR according to the first arrangement are available. One is the first section-intended BSR, and the other is the second section-intended BSR. The first section-intended BSR is equivalent to the BSR in the related art, and is a report for reporting to the radio base station 1 an amount of resource (buffer size) that is desired to transmit data in the first section. In contrast, the second section-intended BSR is a report for reporting to the radio base station 1 an amount of resource (buffer size) that is desired to transmit data in the second section.

Here, when the BSR in LTE in the related art, which is illustrated in FIG. 4, as it is, is used as the first section-intended BSR and the second section-intended BSR, there is a concern that two BSRs will not be identified due to the radio base station 1. For this reason, it is not desirable to use the BSR in such a manner. This is because when the BSR is received, the radio base station 1 allocates the resource for the UL data, but the radio base station 1 has to perform the receiving based on the resource for the UL data in a case where the BSR is intended for the first section, while the radio base station 1 does not have to perform the receiving based on the resource for the UL data in a case where the BSR is intended for the second section. Accordingly, one portion of the BSR in LTE in the related art can be changed to be used as the BSR according to the first arrangement.

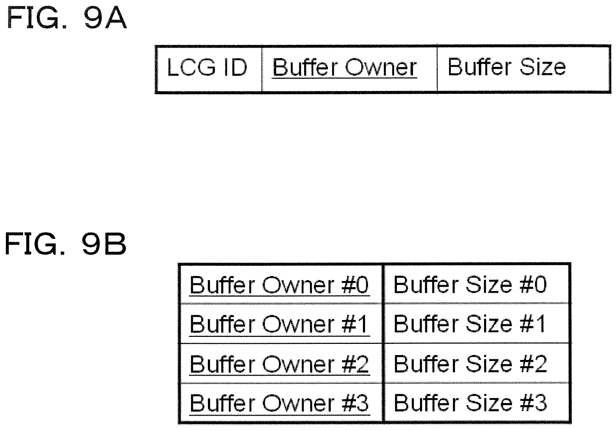

FIG. 9 illustrates one example of the BSR according to the first arrangement. The BSR being illustrated in FIG. 9 is a report to which information (a parameter), Buffer Owner (an underlined portion), is added, compared with that being illustrated in FIG. 4. The Buffer Owner is information indicating whether the BSR is intended for the first section or intended for the second section. Here, the Buffer Owner is one-bit information (BOOLEAN). In a case where the BSR is intended for the first section, the Buffer Owner can be set to 0, and in a case where the BSR is intended for the second section, the Buffer Owner can be set to 1. Accordingly, it is possible for the radio base station 1 to easily identify two types of BSRs.

The first section-intended BSR in S305 in FIG. 6 can be defined as setting the Buffer Owner to 0 in the BSR being illustrated in FIG. 9.

Referring back to FIG. 6, in S308, the radio base station 1 allocates the resource for the second section-intended scheduling request to the mobile phone terminal 2, and transmits allocation information on the resource for the second section-intended scheduling request to the mobile phone terminal 2. In S308, the allocation information on the resource for the second section-intended scheduling request can be defined as setting the sr-Object to 1 in the SchedulingRequestConfig information element being illustrated in FIG. 7.

In S309, the mobile phone terminal 2 notifies the inter-terminal communication-intended radio terminal 3 that the resource for the second section-intended scheduling request is allocated in S308. The notification can be performed using the radio resource dedicated to the connection between terminals, which is allocated in advance for the communication between the mobile phone terminal 2 and the inter-terminal communication-intended radio terminal 3. Furthermore, as the notification in S309, the SchedulingRequestConfig information element received in S308, as it is, can be transmitted and may be converted in a predetermined manner as occasion calls. Moreover, in S309, instead of notifying, in the second section, that the resource for the second section-intended scheduling request is allocated, the user may input information equivalent to the notification of the resource allocation for the second section-intended scheduling request to the ITC terminal.

Then, in S310, the inter-terminal communication-intended radio terminal 3 performs synchronization processing in order to be synchronized with the radio base station 1. The synchronization is defined as including time synchronization and frequency synchronization.

Generally, the allocation of the radio resource is performed in terms of the time component and the frequency component. For this reason, the establishment of time and frequency synchronization among three parties, that is, the radio base station 1, the mobile phone terminal 2, and the inter-terminal communication-intended radio terminal 3 is a requirement for performing the radio resource among the three parties. By the synchronization processing in S310, the inter-terminal communication-intended radio terminal 3 can be synchronized with the radio base station 1. Furthermore, as described above, the synchronization is already established between the radio base station 1 and the mobile phone terminal 2 in an initial setting. Therefore, by the synchronization processing in S310, the time and frequency synchronization is established among the three parties, that is, the radio base station 1, the mobile phone terminal 2, and the inter-terminal communication-intended radio terminal 3, and thus the requirement is satisfied.

The processing in S310 that synchronizes the inter-terminal communication-intended radio terminal 3 to the radio base station 1, for example, can be performed based on the cell search in the same manner as the processing that synchronizes the mobile phone terminal 2 to the radio base station 1. Furthermore, as other methods, the inter-terminal communication-intended radio terminal 3 can perform the synchronization processing with the assistance of the network. An example of the assistance of the network, the mobile phone terminal 2 can notify the inter-terminal communication-intended radio terminal 3 of information that is desired for the synchronization, such as the frequency band that is used by the radio base station 1. The notification of the information that is desired for the synchronization can be performed using the radio resource dedicated to the connection between terminals, which is allocated in advance for the communication between the mobile phone terminal 2 and the inter-terminal communication-intended radio terminal 3.

By performing the steps that are described above, the preparation for the UL user data transmission is completed.

Next, in S311, the UL user data is defined as occurring in the inter-terminal communication-intended radio terminal 3. As one example, in a case where the inter-terminal communication-intended radio terminal 3 is an electric power meter terminal, and a report on an amount of electric power usage is transmitted to a server on a network, and the like, the UL user data occurs in the inter-terminal communication-intended radio terminal 3.

In S312, the inter-terminal communication-intended radio terminal 3 transmits the scheduling request to the mobile phone terminal 2 using the resource for the scheduling request that is indicated by the allocation information on the resource for the second section-intended scheduling request, which is received in S309. As the scheduling request in S312, the scheduling request can be used in S103 in FIG. 1, and other signals may be used. The mobile phone terminal 2 in S312 receives the scheduling request from the inter-terminal communication-intended radio terminal 3.

Next, in S313 to S316, the mobile phone terminal 2 receives a predetermined amount of resource allocated for the resource for the second section-intended UL data from the radio base station 1. Because S313 to S316 are processing steps that correspond to, but differ from S103 to S106 in FIG. 1, respectively, S313 to S316 will be described below.

In S313, the mobile phone terminal 2 transmits the scheduling request to the radio base station 1 using the resource for the scheduling request that is indicated by the allocation information on the resource for the first section-intended scheduling request, which is received in S301. In S313, the radio base station 1 receives the scheduling request from the mobile phone terminal 2. As the scheduling request in S313, the same signal as used in S103 can be used.

In S314, in response to the scheduling request in S313, the radio base station 1 allocates the resource for the first section-intended UL data (BSR) to the mobile phone terminal 2 and transmits the allocation information on the resource for the first section-intended UL data to the mobile phone terminal 2. In S314, the allocation information on the resource for the first section-intended UL data can be defined as setting the Granted Objet to 0 in the UL Grant being illustrated in FIG. 8.

Next, in S315, the mobile phone terminal 2 transmits the BSR to the radio base station 1 using the resource for the UL data that is indicated by the allocation information on the resource for the first section-intended UL data (BSR), which is received in S314. The second section-intended BSR in S315 can be defined as setting the Buffer Owner to 1 in the BSR being illustrated in FIG. 9.

In addition, in S315, the mobile phone terminal 2 sets buffer size information to a predetermined value (fixed value) in the second section-intended BSR. The mobile phone terminal 2 at this time does not understand a size of the UL user data that the inter-terminal communication-intended radio terminal 3 wants to transmit. For this reason, the mobile phone terminal 2 first secures the resource for the second section-intended UL data and which has a second section-intended predetermined value. The predetermined value has to be so great that the inter-terminal communication-intended radio terminal 3 can transmit a size of the UL user data at the least, but it is desirable that the predetermined value be set to be somewhat greater than such a value. This is because in a case where the inter-terminal communication-intended radio terminal 3 is not that great, the UL user data can be transmitted at a time using the second section-intended resource for the UL data, which has the predetermined value.

In S316, the radio base station 1 allocates the UL resource for the second section-intended UL data to the mobile phone terminal 2 based on the BSR received in S315, and transmits the allocation information on the resource for the second section-intended UL data to the mobile phone terminal 2. In S316, the allocation information on the resource for the second section-intended UL data can be defined as setting the Granted Objet to 1 in the UL Grant being illustrated in FIG. 8.

Next, in S317, the mobile phone terminal 2 notifies the inter-terminal communication-intended radio terminal 3 of the allocation information on the resource for the second section-intended UL data is allocated in S316. As the notification in S317, the UL Grant received in S314, as it is, can be transmitted and may be converted as occasion calls.

In S317, the mobile phone terminal 2 performs the notification using the resource for the second section-intended UL data, which is allocated in S316. Here, it is difficult for the inter-terminal communication-intended radio terminal 3 to specify the resource for the second section-intended UL data before receiving the notification in S317. However, in the synchronization processing in S310, the inter-terminal communication-intended radio terminal 3 understands a frequency band of the radio base station 1, which is a frequency band that is prepared in the radio base station 1. After transmitting the scheduling request in S312, the inter-terminal communication-intended radio terminal 3 monitors all frequency bands of the radio base station 1. Accordingly, even though the notification in S317 is mapped onto any one of the frequency bands of the radio base station 1, the inter-terminal communication-intended radio terminal 3 can detect the notification in S317. Also in the LTE system in the related art, the mobile phone terminal 2 monitors all the frequency bands of the radio base station 1 and thus detects the UL Grant. Therefore, it may be said that the processing in S317 imitates such monitoring and detection.

In S318, in response to the notification of the resource for the second section-intended UL data in S317, the inter-terminal communication-intended radio terminal 3 transmits the UL user data and a size of the remaining data to the mobile phone terminal 2 using the resource (a predetermined amount of resource) for the second section-intended UL data that is indicated by the notification. In S318, the inter-terminal communication-intended radio terminal 3 stores one portion or all portions of the UL user data in a first region and stores the size of the remaining data in a second region, among regions (which results from excluding a portion desired for a header, CRC, or the like from a predetermined amount of resource) that are used in transmitting data in the predetermined amount of resource for the second section-intended UL data.

A specific example is used for description. As one example, a size of a region that is used in transmitting data, in a predetermined amount of resource for the second section-intended UL data is assumed to be 1,000 bits. Furthermore, a size of the remaining data that is stored in the second region is assumed to be quantized in 6 bits in accordance with the same rule as with the BSR (FIG. 4C). At this time, leading 994 bits out of the predetermined amount of 1,000 bits is defined as the first region, and the remaining 6 bits are defined as the second region.

Here, a case (referred to as a case 1) is considered where a size of UL data that the inter-terminal communication-intended radio terminal 3 has is 10,000 bits. At this time, the inter-terminal communication-intended radio terminal 3 stores the leading 994 bits, out of 10,000 bits of UL user data, in the first region. Furthermore, the inter-terminal communication-intended radio terminal 3 stores "31" that is a value which is obtained by quantizing 10,000 bits - 994 bits = 9006 bits ≈ 1,126 bytes in accordance with the same rule (FIG. 4C) as with the BSR, in the second region.

According to the first arrangement, a description is without interruption provided below based on the case 1.

In S318, based on the resource for the second section-intended UL data that is allocated in S316, the mobile phone terminal 2 receives one portion of the UL user data and the size of the remaining dada from the inter-terminal communication-intended radio terminal 3. In the case 1 described above, with "31" that is a received value of the second region, the mobile phone terminal 2 recognizes that the remaining data is present, and temporarily stores one portion of the UL user data, which is stored in the first region, in a storage unit. Then, the mobile phone terminal 2 performs processing that further allocates to itself the resource for the second section-intended UL data that the inter-terminal communication-intended radio terminal 3 uses in order to transmit the remaining data.

S319 to S322 correspond to processing steps in which the mobile phone terminal 2 allocates to itself the resource for the second section-intended UL data that the inter-terminal communication-intended radio terminal 3 uses in order to transmit the remaining data. The processing steps S319 to S322 may be performed in almost the same manner as the processing steps S313 to S316, respectively. However, in S321, the mobile phone terminal 2 designates buffer size information, among the BSR, which is to be designated, based on the size of the remaining data stored in the second region in S318. Accordingly, the radio base station 1 allocate to the mobile phone terminal 2 the source for the second section-intended UL data, which corresponds to the size of the remaining data. Because processing steps S319 to S322 are the same as the processing steps S313 to S316, respectively, details of the processing steps S319 to S322 are omitted.

Next, in S323, the mobile phone terminal 2 notifies the inter-terminal communication-intended radio terminal 3 of the allocation information on the resource for the second section-intended UL data, which is allocated in S322. S323 may be performed in the same manner as S317.

Then, in S324, in response to the notification of the allocation information on the resource for the second section-intended UL data in S323, the inter-terminal communication-intended radio terminal 3 transmits the remainder of the UL user data to the mobile phone terminal 2 using the resource (which corresponds to the size of the remaining data) for the second section-intended UL data that is indicated by the notification. In the case 1, in S324, the inter-terminal communication-intended radio terminal 3 transmits 9,006 bits of the remaining data, which is difficult to transmit in S318, to the mobile phone terminal 2.

In S324, the mobile phone terminal 2 receives the remaining data from the inter-terminal communication-intended radio terminal 3. The mobile phone terminal 2 combines the one portion of the UL user data that is already received in S318 and the remaining data received in S324 to restore an original UL user data, and stores the restored original UL user data in the transmission buffer.

Then, the mobile phone terminal 2 transmits the UL user data stored in the transmission buffer to the radio base station 1. S325 to S329 correspond to processing steps in which the mobile phone terminal 2 transmits the UL user data to the radio base station 1. Processing steps S325 to S329 are almost the same as the processing steps S103 to S107 in FIG. 1, respectively. However, the processing steps S325 to S329 partly differ in some respects from the processing steps S103 to S107, respectively, outlines of the processing steps S325 to S329 are described.

First, in S325, the mobile phone terminal 2 transmits the scheduling request to the radio base station 1 using the resource for the first section-intended scheduling request that is allocated in S301. In S326, in response to the scheduling request in S325, the radio base station 1 allocates the resource for the first section-intended UL data (BSR) to the mobile phone terminal 2 and transmits the allocation information on the resource for the UL data to the mobile phone terminal 2. In S327, the mobile phone terminal 2 transmits the BSR to the radio base station 1 using the resource for the first section-intended UL data (BSR) allocated in S326. In S327, the first section-intended BSR can be defined as setting the Buffer Owner to 0 in the BSR being illustrated in FIG. 9. In S328, when the BSR in S327 is received, the radio base station 1 allocates the resource for the first section-intended UL data to the mobile phone terminal 2 based on the BSR, and transmits the allocation information on the resource for the UL data to the mobile phone terminal 2. Last, in S329, the mobile phone terminal 2 transmits the UL user data to the radio base station 1 using the resource for the first section-intended UL data allocated in S328. In S329, the radio base station 1 receives the UL user data from the mobile phone terminal 2 based on the resource for the first section-intended UL data allocated for itself in S328. When performed as described above, the transmission processing of the UL user data according to the first arrangement is completed.

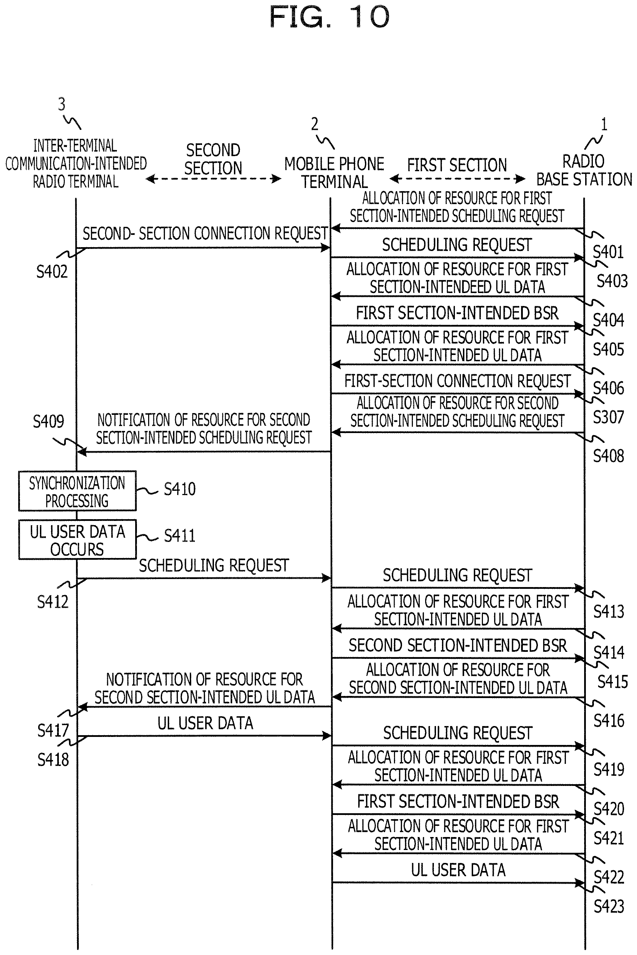

Here, another case (referred to as a case 2) that is different from what is described above is considered where a size of the UL data that the inter-terminal communication-intended radio terminal 3 has is 500 bits is considered. One example of a sequence of processing steps of transmitting the UL user data in the case 2 according to the first arrangement is described referring to FIG. 10.

Because S401 to S417 in FIG. 10 correspond to S301 to S317 in FIG. 6, respectively, descriptions of S401 to S417 are omitted. In S418, the inter-terminal communication-intended radio terminal 3 stores 500 bits of the UL user data in the first region. Furthermore, because the remainder of the UL user data is absent, the inter-terminal communication-intended radio terminal 3 stores "0" that is a value which is obtained by quantizing 0 bit = 0 byte as the size of the remaining data in accordance with the same rule (FIG. 4C) as with the BSR, in the second region.

In S419 in FIG. 10 corresponding to the case 2, because, with "0" that is the value of the second region, which is received in S418, the mobile phone terminal 2 recognizes that the remaining data is not present, the radio base station 1 does not have to allocate to the mobile phone terminal 2 the resource for the second section-intended UL data for the remaining data. Therefore, S319 to S324 in FIG. 6 are not desired in FIG. 10.

Then, the mobile phone terminal 2 transmits the UL user data (in its entirety) received in S418 to the radio base station 1. S419 to S423 in FIG. 10 correspond to processing steps in which the mobile phone terminal 2 transmits the UL user data (in its entirety) to the radio base station 1. Because S419 to S423 in FIG. 10 correspond to S325 to S329 in FIG. 6, respectively, descriptions of S419 to S423 are omitted.

According to the first arrangement described above, in the UL user data transmission processing, in a case where the radio resource is desired for the inter-terminal communication between the inter-terminal communication-intended radio terminal 3 and the mobile phone terminal 2 (for example, in a case where the resource dedicated to the inter-terminal communication, which is prepared in advance, is insufficient due to congestion and the like, and the like), an amount of radio resource desired for the inter-terminal communication can be allocated out of the radio resource prepared in the radio base station 1. Accordingly, it is possible to flexibly allocate the radio resource between the inter-terminal communication-intended radio terminal 3 and the mobile phone terminal 2. Furthermore, even though any one of the radio resources is used, a communication scheme between the mobile phone terminal 2 and the ITC terminal does not have to be changed. For this reason, the ITC terminal according to the present arrangement can be realized without making a great change due to the ITC in the related art.

In addition, in the transmission processing of the UL user data in the processing sequence according to the first arrangement, the radio resource for the scheduling request in LTE is allocated for the inter-terminal communication between the inter-terminal communication-intended radio terminal 3 and the mobile phone terminal 2. Accordingly, an operation is possible that does not involve the radio resource (frequency band) which is prepared in the radio base station 1 in LTE, and the effect also can be obtained that a change due to the LTE system in the related art may be reduced (an introduction cost is small).

### (d) Second Arrangement

The transmission processing of the UL user data is realized according to a second arrangement as is the case according to the first arrangement. According to the first arrangement, when the UL user data is transmitted in the second section (from the inter-terminal communication-intended radio terminal 3 to the mobile phone terminal 2), first, the entire UL user data is sent or one portion of the UL user data and the size of the remaining data are sent, using a predetermined amount of resource for the second section-intended UL data. After this is done, in a case where the remaining data is present, the remaining data is transmitted by allocating the resource for the second section-intended UL data, which corresponds to the size of the remaining data. In contrast, according to the second arrangement, when the UL user data is transmitted in the second section, first, the size of the UL user data is sent using a predetermined amount of resource for the second section-intended UL data. After this is done, the UL user data is transmitted by allocating the resource for the second section-intended UL data, which corresponds to the size of the UL user data.

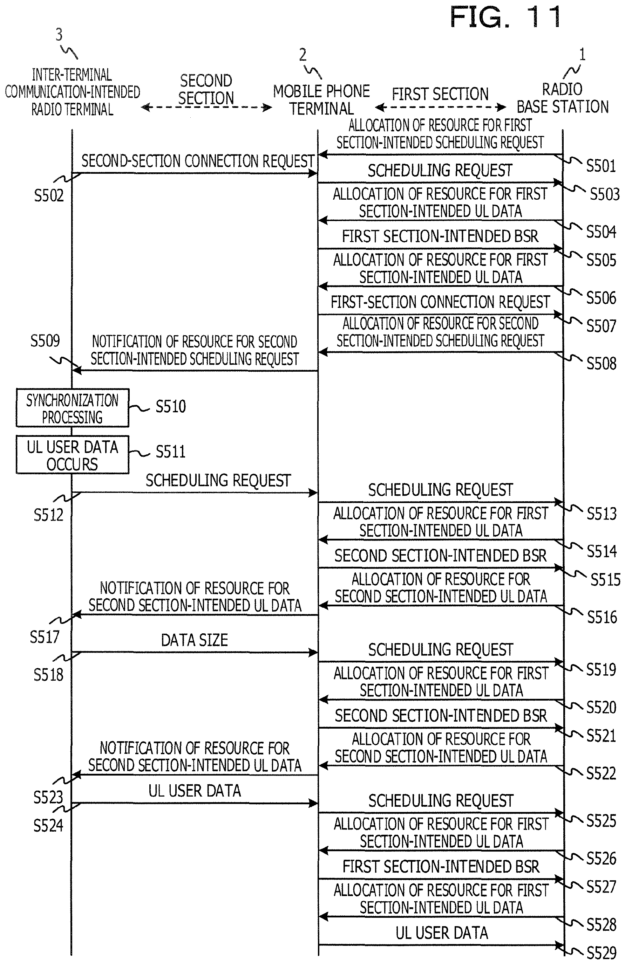

One example of a sequence of processing steps of transmitting the UL user data according to the second arrangement is described referring to FIG. 11. In FIG. 11, main steps relating to the transmission of the UL user data are described. Therefore, it is noted that all steps are not described.

S501 to S529 in FIG. 11 according to the second arrangement almost correspond to S301 to S329 in FIG. 6 according to the first arrangement, respectively. A description is provided below with main focus being on only what distinguishes FIG. 11 from FIG. 6.

The mobile phone terminal 2 in S515 in FIG. 11 transmits the second section-intended BSR to the radio base station 1. Here, in the second section-intended BSR, the buffer size information is set to a predetermined value (fixed value) in the same manner as in S315 in FIG. 6. However, the predetermined value in the second section-intended BSR in S515 has to be great enough for the inter-terminal communication-intended radio terminal 3 to transmit the size of the UL user data. For example, when the inter-terminal communication-intended radio terminal 3 sends the size of the UL user data, if the size of the UL user data is quantized in 5 bits in accordance with the same rule (FIG. 4C) as with the BSR, the predetermined value of 5 bits (a value indicating 5 bits) is great enough. At this time, the predetermined value in the second section-intended BSR in S515 is "1" that is obtained by quantizing 5 bits = 0.625 byte in accordance with the same rule (FIG. 4C) as with the BSR. An another example, when the inter-terminal communication-intended radio terminal 3 sends the size of the UL user data, the BSR itself (FIG. 4 or FIG. 9) can be used. Also in this case, the predetermined value in the second section-intended BSR in S515 is "1."

In S518 in FIG. 11, in response to the notification of the allocation information on the resource for the second section-intended UL data in S517, the inter-terminal communication-intended radio terminal 3 transmits the size of the UL user data to the mobile phone terminal 2 using the resource (a predetermined amount of resource) for the second section-intended UL data that is indicated by the notification. In S318 in FIG. 6, the entire UL user data or one portion of the UL user data is transmitted, but in S517, only the size of the UL user data is transmitted.

In S524 in FIG. 11, in response to the notification of the allocation information on the resource for the second section-intended UL data in S523, the inter-terminal communication-intended radio terminal 3 transmits the UL user data (in its entirety) to the mobile phone terminal 2 using the resource (which corresponds to the size of the UL user data) for the second section-intended UL data that is indicated by the notification. In S324 in FIG. 6, the remainder of the UL user data is transmitted, but in S524, the entire UL user data is transmitted. This is because in S518, one portion of the UL user data is not transmitted.

According to the second arrangement described above, when the UL user data is transmitted in the second section (from the inter-terminal communication-intended radio terminal 3 to the mobile phone terminal 2), first, the size of the UL user data is sent using a predetermined amount of resource for the second section-intended UL data. After this is done, the UL user data is transmitted by allocating the resource for the second section-intended UL data, which corresponds to the size of the UL user data. Accordingly, according to the second arrangement, because the UL user data is regularly transmitted at a time in the second section, any portion of the UL user data in the mobile phone terminal 2 do not have to be retained (while awaiting the remaining data), as is the case according to the first arrangement.

### (e) Third Arrangement

The transmission processing of the UL user data is realized according to a third arrangement as is the case according to the first and second arrangements. According to the second arrangement, when the size of the UL user data is transmitted in the second section (from the inter-terminal communication-intended radio terminal 3 to the mobile phone terminal 2), the resource for the second section-intended UL data is used. In contrast, according to the third arrangement, when the size of the UL user data is transmitted in the second section, the resource for the second section-intended scheduling request is used.

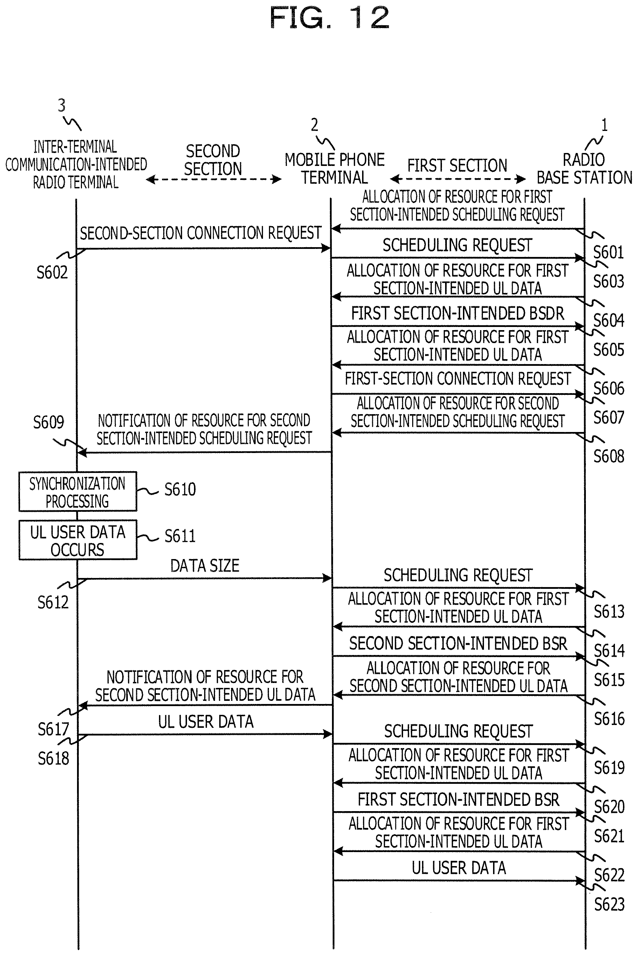

One example of a sequence of processing steps of transmitting the UL user data according to the third arrangement is described referring to FIG. 12. In FIG. 12, main steps relating to the transmission of the UL user data are described. Therefore, it is noted that all steps are not described.

FIG. 12 according to the third arrangement and FIG. 11 according to the second arrangement have much in common. A description is provided below with main focus being on only what distinguishes FIG. 12 from FIG. 11. First, because S601 to S611 in FIG. 12 correspond to S501 to S511 in FIG. 11, respectively, descriptions of S601 to S611 are omitted here.

Next, In S612, the inter-terminal communication-intended radio terminal 3 transmits the size of the UL user data to the mobile phone terminal 2 using the resource for the scheduling request that is indicated by the allocation information on the resource for the second section-intended scheduling request, which is received in S609. The information that is sent in S612 (the data size of the UL user data) may be the same as the information that is sent in S518 in FIG. 11. However, there is a difference between S518 and S612 in that in order to send the data size of the UL user data, the resource for the second section-intended UL data is used in S518, while the resource for the scheduling request is used in S612.

Here, because the resource for the scheduling request in LTE in the related art is minute, the size of the UL user data is considered to be difficult to send. However, it is also considered that the resource for the scheduling request will be larger in the future. In such a case, the present arrangement can be realized. Furthermore, as will be described in detail below, the third arrangement can be realized based on a comparatively great size of a resource (resource for the CQI report and the like) that is a periodical resource other than the resource for the scheduling request. In addition, the size of the UL user data may be divided for transmission, using the resource for the scheduling request or the periodical resource other than the resource for the scheduling request multiple times. Of course, each arrangement in the present application is not limited to LTE. If the radio communication system is present in which the resource for the scheduling request is comparatively great, it is considered that it is possible to apply the third arrangement.

Because S613 to S623 in FIG. 12 correspond to S519 to S529 in FIG. 11, respectively, descriptions of S613 to S623 are omitted here.

According to the third arrangement described above, when the size of the UL user data is transmitted in the second section (from the inter-terminal communication-intended radio terminal 3 to the mobile phone terminal 2), the resource for the second section-intended scheduling request is used. Accordingly, according to the third arrangement, the resource for the second section-intended UL data is not desired for transmitting the size of the UL user data. For this reason, according to the third arrangement, signaling (which is equivalent to S512 to S517 in FIG. 11) is not desired for allocating the resource for the second section-intended UL data in order to transmit the size of the UL user data, and a delay in transmitting the UL user data is reduced compared with the first and second arrangements.

### (f) Fourth Arrangement

The transmission processing of the UL user data is realized according to a fourth arrangement as is the case according to the first to third arrangements. According to the third arrangement described above, the UL user data is transmitted in the second section using the resource for the second section-intended UL data that is allocated after the size of the UL user data is transmitted using the resource for the scheduling request in the second section (from the inter-terminal communication-intended radio terminal 3 to the mobile phone terminal 2). In contrast, according to the fourth arrangement, the size of the second section-intended UL user data is not transmitted, and the UL user data is transmitted using the resource for the scheduling request in the second section.

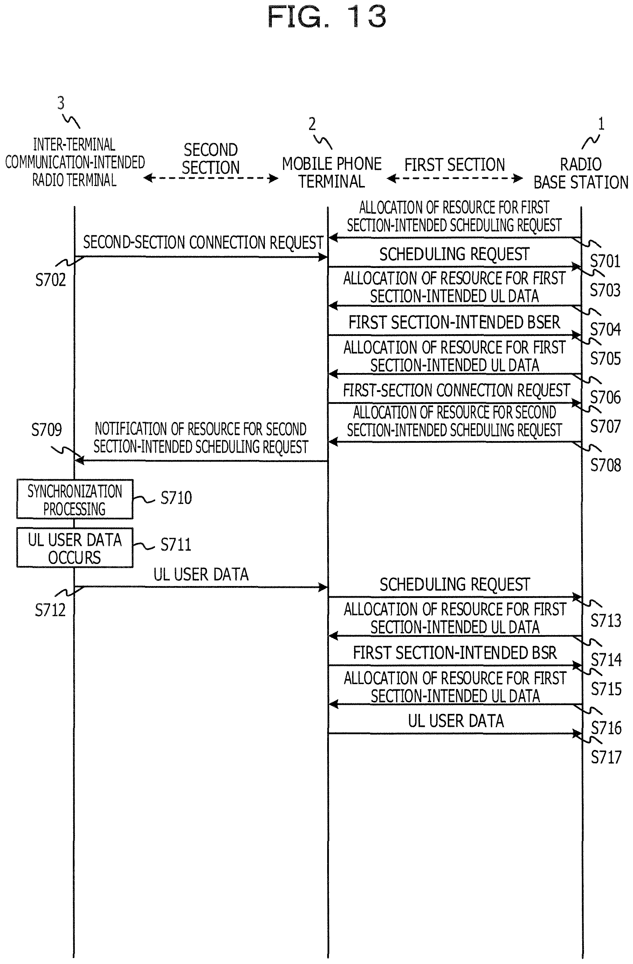

One example of a sequence of processing steps of transmitting the UL user data according to the fourth arrangement is described referring to FIG. 13. In FIG. 13, main steps relating to the transmission of the UL user data are described. Therefore, it is noted that all steps are not described.

FIG. 13 according to the fourth arrangement and FIG. 12 according to the third arrangement have much in common. A description is provided below with main focus being on only what distinguishes FIG. 13 from FIG. 12. First, because S701 to S711 in FIG. 13 correspond to S601 to S611 in FIG. 12, respectively, descriptions of S701 to S711 are omitted here.

Next, In S712, the inter-terminal communication-intended radio terminal 3 transmits the UL user data to the mobile phone terminal 2 using the resource for the scheduling request that is indicated by the allocation information on the resource for the second section-intended scheduling request, which is received in S709. The radio resource (the resource for the second section-intended UL data) that is used in S712 is the same as one that is used in S612 in FIG. 12. However, there is a difference between S712 and S612 in that the UL user data, as it is, is sent in S712, while the size of the UL user data is sent in S612.

Here, because the resource for the scheduling request in LTE in the related art is minute, the UL user data is considered to be difficult to send. However, it is also considered that the resource for the scheduling request will be larger in the future. In such a case, the present arrangement can be rea lized .

Furthermore, as will be described in detail below, the fourth arrangement can be realized based on a comparatively great size of a resource (resource for the CQI report and the like) that is a periodical resource other than the resource for the scheduling request. In addition, the UL user data may be divided for transmission, using the resource for the scheduling request or the periodical resource other than the resource for the scheduling request multiple times. Of course, each arrangement or embodiment in the present application is not limited to LTE. If the radio communication system is present in which the resource for the scheduling request is comparatively great, it is considered that it is possible to apply the fourth arrangement.

Because S713 to S717 in FIG. 13 correspond to S619 to S623 in FIG. 12, respectively, descriptions of S713 to S717 are omitted here.

According to the fourth arrangement described above, the size of the UL user data is not transmitted in the second section (from the inter-terminal communication-intended radio terminal 3 to the mobile phone terminal 2), and the UL user data is transmitted using the resource for the scheduling request in the second section. Accordingly, according to the fourth arrangement, the resource for the second section-intended UL data is not desired for transmitting the UL user data. For this reason, according to the fourth arrangement, the signaling (which is equivalent to S612 to S617 in FIG. 12) is not desired for allocating the resource for the second section-intended UL data in order to transmit the UL user data, and the delay in transmitting the UL user data is reduced compared with the first to third arrangements.

Moreover, it is also possible to combine the arrangements, according to each of which the transmission processing of the UL user data are realized. As one example, it is possible to combine the third arrangement and the fourth arrangement. Specifically, in a case where the size of the UL user data is comparatively great, the third arrangement can be applied, and in a case where the size of the UL user data is comparatively small, the fourth arrangement can be applied. In the former case, in S612 according to the third arrangement, one portion of the UL user data and the size of the remaining data may be sent as in S118 according to the first arrangement.

### (g) Embodiment

According to an embodiment, the transmission processing of the DL user data is realized.

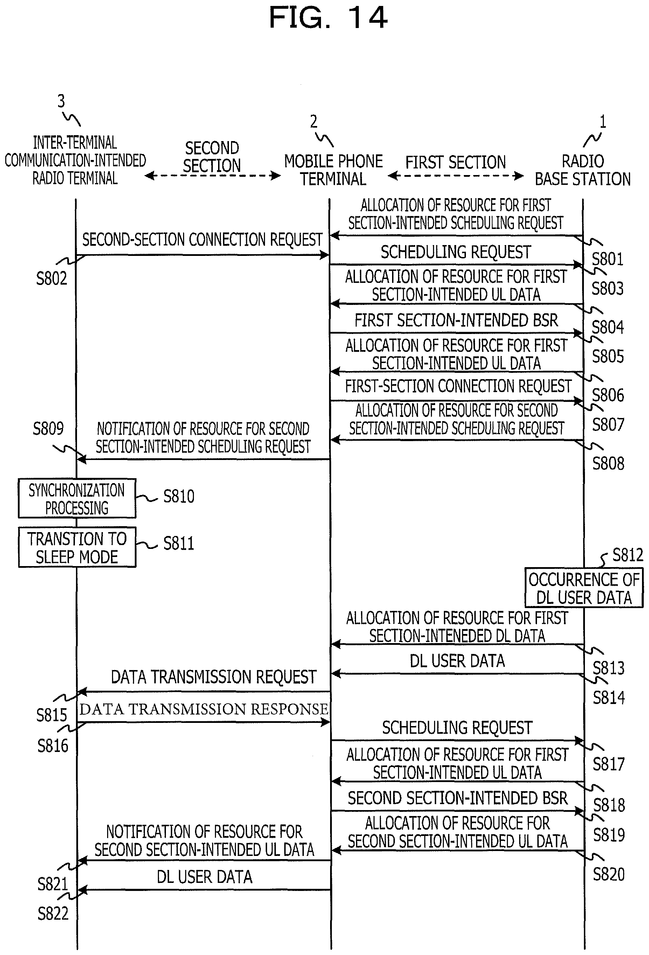

One example of a sequence of processing steps of transmitting the DL user data according to the embodiment is described referring to FIG. 14. In FIG. 14, main processing relating to the transmission of the DL user data is described. Therefore, it is noted that entire processing is not illustrated.

Although not specifically illustrated in the sequence in FIG. 14, before S801, a step that is performed before S201 in the sequence in FIG. 5 is performed. That is, before S801, when activated (powered on), the mobile phone terminal 2 is synchronized with one radio base station 1 that is selected by performing so-called cell search, and performs various initial settings for starting to communicating with the radio base station 1. S801 in FIG. 14 is equivalent to the initial setting.

In S801 in FIG. 14, the radio base station 1 allocates the resource for the first section-intended scheduling request to the mobile phone terminal 2 and transmits the allocation information on the resource for the first section-intended scheduling request to the mobile phone terminal 2. S801 may be performed in the same manner as S301 in FIG. 6. In S801, the allocation information on the radio resource for the first section-intended scheduling request can be defined as setting the sr-Object to 0 in the SchedulingRequestConfig information element being illustrated in FIG. 7.

Next, the inter-terminal communication-intended radio terminal 3 performs processing of establishing a connection to a network through the mobile phone terminal 2. The connection processing corresponds to S802 to S810 in FIG. 14.

In S802, the inter-terminal communication-intended radio terminal 3 transmits the second-section connection request to the mobile phone terminal 2. The second-section connection request is defined as including at least the identifier of the inter-terminal communication-intended radio terminal 3. As the identifier of the inter-terminal communication-intended radio terminal 3, a media access control (MAC) address can be used that is a physical identifier (physical address) that is uniquely assigned to an apparatus on the network. The second-section connection request can be transmitted using the radio resource dedicated to the connection between terminals, which is allocated in advance for the communication between the mobile phone terminal 2 and the inter-terminal communication-intended radio terminal 3. Moreover, in S802, instead of transmitting the second-section connection request in the second section, the user may input the information equivalent to the second-section connection request to the mobile phone terminal 2.

In S803 to S807, the mobile phone terminal 2 transmits the first-section connection request to the radio base station 1 based on the second-section connection request received in S802. The first-section connection request includes at least the identifier of the inter-terminal communication-intended radio terminal 3, which is making a request for the second-section connection. Because S803 to S807 that are processing steps of transmitting the first-section connection request may be performed in the same manner as S303 to S307 in FIG. 6, description of S803 to S807 are omitted.

In S807, the radio base station 1 receives the first-section connection request from the mobile phone terminal 2. Based on the second-section connection request, the radio base station 1 recognizes the identifier of the inter-terminal communication-intended radio terminal 3. Moreover, the first-section connection request associated with the UL user data transmission according to the first to fourth arrangements (FIG. 3 and other figures) does not have to include the identifier of the inter-terminal communication-intended radio terminal 3 because the first-section connection request is only a signal that triggers the allocation of the resource for the second section-intended scheduling request to the mobile phone terminal 2 by the radio base station 1. In contrast, the first-section connection request associated with the DL user data transmission according to the embodiment has to include the identifier of the inter-terminal communication-intended radio terminal 3. This is because, in the radio base station 1 and an apparatus at a higher level than the radio base station 1, the DL user data is difficult to transmit to the inter-terminal communication-intended radio terminal 3 through the mobile phone terminal 2, when it is not understood in advance which mobile phone terminal 2 the inter-terminal communication-intended radio terminal 3 is addressed to, in a case where the DL user data (generally, data that is destined for an IP address allocated to the inter-terminal communication-intended radio terminal 3) is received that is intended for the inter-terminal communication-intended radio terminal 3. Moreover, in a case where a MAC address is used as the identifier of the inter-terminal communication-intended radio terminal 3, a router or the like, which is one of the apparatus at higher level than the base station, has to manage a correspondence table of MAC addresses and IP addresses, but this is not described in detail here.

Next, in S808, the radio base station 1 allocates the resource for the second section-intended scheduling request to the mobile phone terminal 2, and transmits the allocation information on the resource for the second section-intended scheduling request to the mobile phone terminal 2. In S808, the allocation information on the resource for the second section-intended scheduling request can be defined as setting the sr-Object to 1 in the SchedulingRequestConfig information element being illustrated in FIG. 7. In S809, the mobile phone terminal 2 notifies the inter-terminal-intended radio terminal 3 that the resource for the second section-intended scheduling request is allocated in S808. S808 and S809 may be performed in the same manner as S308 and S309 in FIG. 6, respectively.

Then, in S810, the inter-terminal-intended radio terminal 3 performs the synchronization processing in order to be synchronized with the radio base station 1. The synchronization is defined as including the time synchronization and the frequency synchronization. S810 may be performed in the same manner as S310 in FIG. 6.

By performing the steps that are described above, the preparation for the UL user data transmission is completed.

Next, in S811, the inter-terminal communication-intended radio terminal 3 transitions to a sleep mode (also referred to as an idle mode). Here, the sleep mode is a so-called waiting mode and, in other words, a power saving mode. The inter-terminal communication-intended radio terminal 3 transitions to the sleep mode in order to suppress power consumption in a case where the user data is not transmitted or is not received for a given period of time and the like. Because power saving is desirable and in most cases, communication is not frequently performed, the inter-terminal communication-intended radio terminal 3 spends most of the time waiting in the sleep mode.

The inter-terminal communication-intended radio terminal 3 performs intermittent communication in order to realize the power saving in the sleep mode. That is, the inter-terminal communication-intended radio terminal 3 is intermittently available for communication in the sleep mode and, at other times, does not perform the communication (a communication function is powered off).

Here, the inter-terminal communication-intended radio terminal 3 determines the timing for the intermittent communication when transitioning to the sleep mode. However, the inter-terminal communication-intended radio terminal 3 according to the present embodiment makes this determination based on the resource for the scheduling request that is notified in S803. That is, the inter-terminal communication-intended radio terminal 3 according to the present embodiment determines the timing for the intermittent communication in such a manner that the receiving is possible at the timing (subframe) to which the resource for the scheduling request.

Moreover, in S811, the inter-terminal communication-intended radio terminal 3 may notify the mobile phone terminal 2 that the inter-terminal communication-intended radio terminal 3 transitions to the sleep mode (not illustrated). The notification can be transmitted using the radio resource dedicated to the connection between terminals, which is allocated in advance for the communication between the mobile phone terminal 2 and the inter-terminal-intended radio terminal 3.

In S812, the DL user data is defined as occurring in the radio base station 1. For example, in a case where a server on the Internet transmits inquiry information to the inter-terminal communication-intended radio terminal 3, the DL user data occurs.

In S813, the radio base station 1 allocates the resource for the first section-intended DL data for transmitting the DL user data to the mobile phone terminal 2, and transmits the allocation information on the resource for the first section-intended DL data to the mobile phone terminal 2. Because S813 corresponds to S202 in FIG. 5, a description of S813 is omitted. In S813, the mobile phone terminal 2 receives the allocation information on the resource for the DL data from the radio base station 1.

In S814, the radio base station 1 transmits the DL user data to the mobile phone terminal 2 using the resource for the first section-intended DL data, which is allocated in S813. At this time, the radio base station 1 transmits identification information (information that is received in S807) on the inter-terminal communication-intended radio terminal 3 in a state of being appended to the DL user data). Moreover, in S814, because the radio base station 1 recognizes a correspondence between the inter-terminal communication-intended radio terminal 3 and the mobile phone terminal 2 in S807, the radio base station 1 exercise care to in specifying the mobile phone terminal 2 that becomes a relay destination when the DL user data is received that is destined for the inter-terminal communication-intended radio terminal 3. In S814, the mobile phone terminal 2 receives the DL user data to which the identification information on the inter-terminal communication-intended radio terminal 3 is appended, based on the allocation information on the resource for the first section-intended DL data, which is received in S813.

Next, in S815, the mobile phone terminal 2 transmits a data transmission request to the inter-terminal communication-intended radio terminal 3 using the resource for the second section-intended scheduling request, which is allocated in S808. The data transmission request is a signal for notifying that the DL user data which the mobile phone terminal 2 transmits to the inter-terminal communication-intended radio terminal 3 is present. The inter-terminal communication-intended radio terminal 3 can receive the data transmission request based on the resource for the second section scheduling request that is notified in S809 (that is, at the timing for the intermittent communication in the sleep mode). When receiving the data transmission request, the inter-terminal communication-intended radio terminal 3 returns from the sleep mode, and prepares for receiving the DL user data.

In S816, in response to the data transmission request in S815, the inter-terminal communication-intended radio terminal 3 transmits a data transmission response to the mobile phone terminal 2 based on the resource for the second section-intended scheduling request, which is notified in S809.

Then, in response to the data transmission response in S816, the mobile phone terminal 2 transmits the DL user data to the inter-terminal communication-intended radio terminal 3. S817 to S822 in FIG. 14 correspond to the processing steps in which the mobile phone terminal 2 transmits the DL user data to the inter-terminal communication-intended radio terminal 3. Because S817 to S821 in FIG. 14 may be performed in the same manner as S313 to S317 in FIG. 6, respectively, descriptions of S817 to S821 are omitted.

Last, in S822, based on the resource for the second section-intended UL data that is notified in S821, the mobile phone terminal 2 transmits the DL user data to the inter-terminal communication-intended radio terminal 3. Moreover, the resource for the second section-intended UL data means a "resource for the UL data that is prepared for the communication between the radio base station 1 and the mobile phone terminal 2, but is allocated intendedly for the second section". Therefore, it is noted that the resource for the second section-intended UL data is not necessarily a source for transmitting the UL data. For this reason, there is no particular problem in transmitting the DL user data using the resource for the second section-intended UL data in S822.

In S822, the inter-terminal communication-intended radio terminal 3 receives the DL user data from the mobile phone terminal 2 based on the resource for the second section-intended UL data, which is notified in S821. When performed as described above, the transmission processing of the DL user data according to the embodiment is completed.

According to the embodiment described above, in the DL user data transmission processing, in the case where the radio resource is desired for the inter-terminal communication between the inter-terminal-intended radio terminal 3 and the mobile phone terminal 2 (for example, in the case where the resource dedicated to the inter-terminal communication, which is prepared in advance, is insufficient due to congestion and the like, and the like), an amount of radio resource desired for the inter-terminal communication can be allocated out of the radio resource prepared in the radio base station 1. Accordingly, it is possible to flexibly allocate the radio resource between the inter-terminal communication-intended radio terminal 3 and the mobile phone terminal 2. Furthermore, even though any one of the radio resources is used, the communication scheme between the mobile phone terminal 2 and the ITC terminal does not have to be changed. For this reason, the ITC terminal according to the present embodiment can be realized without making a great change due to the ITC in the related art.

In addition, in the transmission processing of the DL user data in the processing sequence according to the embodiment, the radio resource for the scheduling request in LTE is allocated for the inter-terminal communication between the inter-terminal-intended radio terminal 3 and the mobile phone terminal 2. Accordingly, an operation is possible that does not involve the radio resource (frequency band) which is prepared in the radio base station 1 in LTE, and the effect also can be obtained that a change due to the LTE system in the related art may be reduced (an introduction cost is small).

### (h) Fifth Arrangement

The transmission processing of the DL user data is realized according to a fifth arrangement as is the case according to the embodiment. According to the embodiment, when the DL user data is transmitted in the second section (from the mobile phone terminal 2 to the inter-terminal-intended radio terminal 3), the transmission is performed using the resource for the second section-intended UL data. In contrast, according to the fifth arrangement, when the DL user data is transmitted in the second section, the DL user data is transmitted using the resource for the scheduling request.

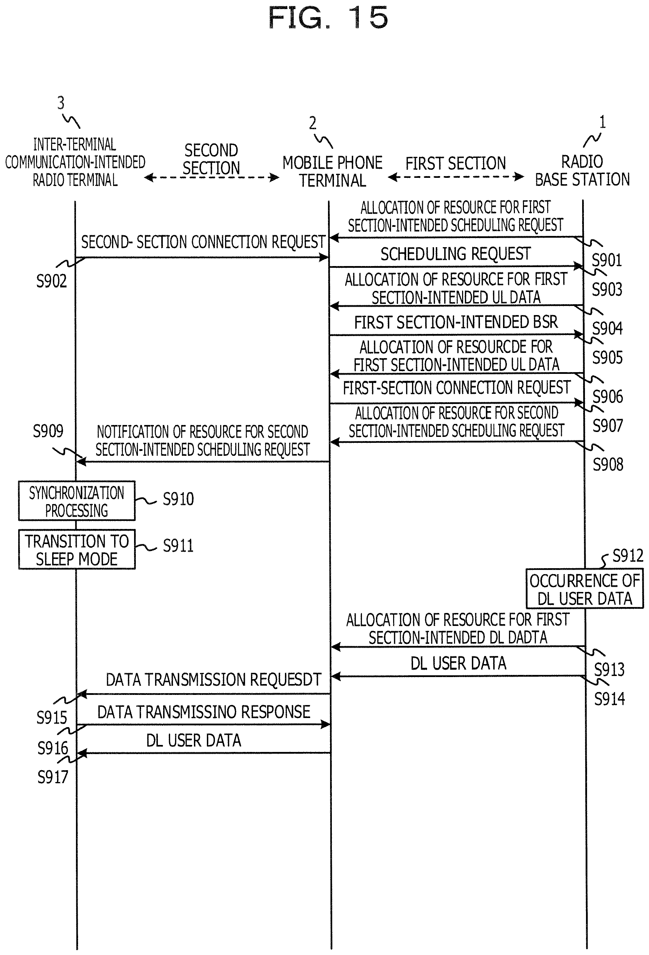

One example of a sequence of processing steps of transmitting the DL user data according to the fifth arrangement is described referring to FIG. 15. In FIG. 15, main steps relating to the transmission of the DL user data are described. Therefore, it is noted that all steps are not described.

FIG. 15 according to the fifth arrangement and FIG. 14 according to the embodiment have much in common. A description is provided below with main focus being on only what distinguishes FIG. 15 from FIG. 14. First, because S901 to S916 in FIG. 15 correspond to S801 to S816 in FIG. 14, respectively, descriptions of S901 to S916 are omitted here.

Next, In S917, the mobile phone terminal 2 transmits the DL user data to the inter-terminal communication-intended radio terminal 3 using the resource for the scheduling request that is indicated by the allocation information on the resource for the second section-intended scheduling request, which is received in S909. There is a difference between S822 and S917 in that in order to send the data size of the DL user data, the resource for the second section-intended UL data is used in S822 in FIG. 14, while the resource for the scheduling request is used in S917 in FIG. 15.

Here, because the resource for the scheduling request in LTE in the related art is minute, the DL user data is considered to be difficult to send. However, it is also considered that the resource for the scheduling request will be greater in the future. In such a case, the present arrangement can be realized. Furthermore, as will be described in detail below, the fifth arrangement can be realized based on a comparatively great size of a resource (resource for the CQI report and the like) that is a periodical resource other than the resource for the scheduling request. In addition, the DL user data may be divided for transmission, using the resource for the scheduling request or the periodical resource other than the resource for the scheduling request multiple times. Of course, each arrangement or embodiment in the present application is not limited to LTE. If the radio communication system is present in which the resource for the scheduling request is comparatively great, it is considered that it is possible to apply the fifth arrangement.

According to the fifth arrangement described above, when the DL user data is transmitted in the second section (from the mobile phone terminal 2 to the inter-terminal communication-intended radio terminal 3), the DL user data is transmitted using the resource for the scheduling request. Accordingly, according to the fifth arrangement, the resource for the second section-intended UL data is not desired for transmitting the DL user data. For this reason, according to the fifth arrangement, the signaling (which is equivalent to S817 to S821 in FIG. 14) is not desired for allocating the resource for the second section-intended UL data in order to transmit the DL user data, and the delay in transmitting the DL user data is reduced compared with the embodiment.

Moreover, it is possible to combine the embodiment and the fifth arrangement that realize the transmission processing of the DL user data. Specifically, in a case where the size of the DL user data is comparatively great, the embodiment can be applied, and in a case where the size of the DL user data is comparatively small, the fifth arrangement can be applied.

### (i) Modification Example of Using a Random Access Channel

According to the first to fifth arrangements and embodiment described above, an example of transmitting the scheduling request on the PUCCH that is a physical uplink control channel. However, a channel on which the scheduling request is transmitted is not limited to the PUCCH, and the scheduling request can be transmitted on a Physical Random Access CHannel (PRACH) that is a physical random access channel. Such a modification example will be described below.

Generally, the processing sequence in a case of transmitting the scheduling request on the PRACH is not different from that in a case of transmitting the scheduling request on the PUCCH. However, because the PRACH is a channel for random access, it is noted that there is no distinction between the "first section-intended" and the "second section-intended" in the radio resource in the case where transmitting the scheduling request on the PRACH.

An outline of processing in the modification example of transmitting the scheduling request on the PRACH will be described below compared with the first arrangement (FIG. 6). The modification example can be applied also to the second to fifth arrangements and embodiment in the same manner as is the case with the first arrangement.

In the case of transmitting the scheduling request on the PRACH, the resource allocation for the scheduling request in S301 corresponds to a master information block (MIB) that is report information that notifies DL frequency band. The mobile phone terminal 2 can obtain a PRACH resource, that is, a second section-intended resource, from the DL frequency band, in accordance with a predetermined rule (6 resources blocks in the center of a specific subframe). For this reason, when the mobile phone terminal receives second-section connection request (which corresponds to S302), in response to the second-section connection request, the mobile phone terminal 2 transmits a notification of the resource for the scheduling request to the inter-terminal communication-intended radio terminal 3 (S309). Processing steps that are equivalent to S303 to S308 in FIG. 6 are not desired.

In the case of transmitting the scheduling request on the PRACH, S313 to S316 in FIG. 6 are equivalent to contention-based random access steps in LTE. Specifically, S313 corresponds to Random Access Preamble, S314 to Random Access Response, S315 to Scheduled Transmission, and S316 to Contention Resolution. Details of these are omitted here.

### (j) Other Modification Example

According to the first to fifth arrangements and embodiment described above, as described above, as the radio communication scheme in the second section, that is, between the mobile phone terminal 2 and the inter-terminal-intended radio terminal 3, for example, a scheme is employed that is based on the standard for the radio LAN such as WiFi (a registered trademark). At this time, the communication in the second section is performed without collision, using carrier sense. That is, the radio resource that is allocated to the second section is controlled in such a manner that the radio resource is not used at the same time between the mobile phone terminal 2 and the multiple inter-terminal communication-intended radio terminals 3. Accordingly, it is also possible for one mobile phone terminal 2 to support the multiple inter-terminal communication-intended radio terminals 3 without the radio base station 1 allocating the resource to the one mobile phone terminal 2 each time.

As one example, in FIG. 6 according to the first arrangement, a case is considered where the mobile phone terminal 2 has received the second section-intended scheduling request in S312 from two inter-terminal communication-intended radio terminals 3 for a given period of time. At this time, in S316, the mobile phone terminal 2 is allocated the resource for the second section-intended UL data one time by transmitting the scheduling request in S313 only one time. Then, the mobile phone terminal 2 notifies the multiple inter-terminal communication-intended radio terminals 3 that the resource for the second section-intended UL data is allocated, at the same time in S317, and the two inter-terminal communication-intended radio terminals 3 each perform the communication with the resource for the second section-intended UL data, which is indicated by the allocation of the resource for the second section-intended UL data in S318. At this time, the two inter-terminal communication-intended radio terminals 3 share one resource for the second section-intended UL data, but performs control in such a manner that collision does not occur during the communication using the carrier sense. Accordingly, one mobile phone terminal 2 can support the multiple inter-terminal communication-intended radio terminals 3 without the radio base station 1 allocating the resource to the one mobile phone terminal 2 each time.

Furthermore, the LTE system in the related art, as apparent from the description of S104 in FIG. 1, the resource that is indicated by the UL Grant which is resource allocation information is determined as the fourth UL subframe (that is, one subframe) from the DL subframe corresponding to the UL grant. However, as described above, as the radio communication scheme in the second section, that is, between the mobile phone terminal 2 and the inter-terminal-intended radio terminal 3, for example, in a case where the communication that is based on the carrier sense is performed in accordance with a standard for the radio LAN such as WiFi (a registered trademark), there is a concern that a unit on the time axis for the allocation of the resource for the UL data will be as short as one subframe (one millisecond).

Then, according to the first to fifth arrangements and f embodiment, the allocation of the resource for the second section-intended UL data may be allocated in units of multiple subframes. For example, in the allocation information (UL Grant) on the resource for the second section-intended UL data, the number of subframes that is an unit for allocation can be set to a fixed number of subframes (as one example, 10 subframes). Furthermore, in the allocation information on the resource for the second section-intended UL data, information that designates the number of subframes that is the unit for allocation may be included. As a specific example, "assigned period," 4-bit information can be newly defined in the UL Grant, and the number of subframes that is the unit for allocation can be designated as any number between 0 to 15.

In addition, according to the first to fifth arrangements and embodiment described above, the example is described in which the resource for the scheduling request is used as a periodic resource for second section-intended communication. However, the periodic resource for the second section-intended communication is not limited to the resource for the scheduling request. For example, according to the first to fifth arrangements and embodiment, the resource for the CQI report, which is described above, or a resource for a CQI/precoding matrix indicator (PMI)/rank indication (RI) report can be also used instead of the resource for the scheduling request. Furthermore, instead of the resource for the scheduling request, it is also possible to use the periodic UL resource based on semi-persistent scheduling for the UL.

Furthermore, according to the first to fifth arrangements and embodiment, the example is described in which the UL resource is used as the resource for the second section-intended communication. However, according to the first to fifth arrangements and the embodiment, it is also possible to use a DL resource as the resource of the second section-intended communication. In such a case, periodic DL resource and the like that are based on periodic semi-persistent scheduling for the DL can be used as the periodic resource that substitutes for the resource for the scheduling request.

Last, according to the first to fifth arrangements and embodiment, the example is described in which the radio LAN such as WiFi (a registered trademark) is applied as the radio resource (frequency band) and the communication scheme that are used between the mobile phone terminal 2 and the inter-terminal communication-intended radio terminal 3 (in the second section), but the radio resource and the communication scheme are not limited to this. For example, Bluetooth (a registered trademark), Zigbee (a registered trademark), GSM (a registered trademark, Global System for Mobile communications), Universal Mobile Telecommunications system (UMTS), infrared communication and the like can be used as the radio resource and the communication scheme that are used in the second section.

### (k) Network Configuration of the Radio Communication System according to Each Arrangement or Embodiment

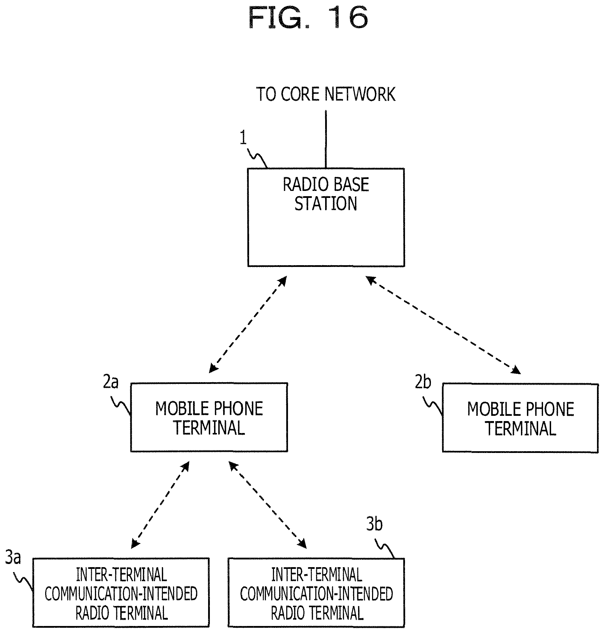

FIG. 16 illustrates a network configuration of the radio communication system according to each arrangement or embodiment. The present arrangement or embodiment is associated with the radio communication system in compliance with LTE. For this reason, terms and concepts that are specific to LTE are used. However, the present arrangement or embodiment is only one example. Therefore, it is noted that application to a radio communication system in compliance with a communication standard other than LTE is possible.

The radio communication system being illustrated in FIG. 16 includes the radio base station 1 (eNB: evolved Node B), the mobile phone terminal 2 (UE: User Equipment), the inter-terminal communication-intended radio terminal 3, and the like. In the present application, the mobile phone terminal 2 (2a and 2b) and the inter-terminal communication-intended radio terminal 3 (3a and 3b) are collectively referred to as a "radio terminal." Furthermore, the radio base station 1, the mobile phone terminal 2, and the inter-terminal communication-intended radio terminal 3 are collectively referred to as a "radio station."

A radio network between the radio base station 1 and the mobile phone terminal 2 is referred to as a radio access network. A cable or radio network (transmission network) called a backhaul network provides connections among the radio base stations 1. The backhaul network is a network that provides the connections among the radio base stations 1 or provides a connection between the radio base station 1 and a core network. The radio base station 1 can perform the communication with an apparatus that is connected to the core network, through the backhaul network. A Mobility Management Entity (MME) or a System Architecture Evolution Gateway (SAE-GW) that is not illustrated is connected to the core network. Moreover, an LTE network is also referred to as an Evolved Packet System (EPS). The EPS includes an Evolved Universal Terrestrial Radio Network (eUTRAN) that is a radio access network, and an Evolved Packet Core (EPC) that is a core network. The core network is also referred to as a System Architecture Evolution (SAE).

The radio base station 1 (simply also referred to as a base station) in FIG. 16 is an apparatus that performs the radio communication with the mobile phone terminal 2 through the radio access network and has a connection to the backhaul network. In addition to transmitting and receiving data to and from the mobile phone terminal 2 (which is also referred to as a connected mobile phone terminal) that is under the control of the radio base station 1, the radio base station 1 performs various control tasks on the mobile phone terminal 2 by exchanging various pieces of control information with the mobile phone terminal 2 that is under the control of the radio base station 1. Furthermore, in addition to mutually performing data relay between the radio base station 1 and a different radio base station 1, the radio base station 1 can operate in cooperation with the different radio base station 1 by exchanging various piece of information with the different radio base station 1 through the backhaul network.

The radio base station 1 exchanges various pieces of information with a control apparatus, such as the MME, which has a connection to the core network that lies before the backhaul network, through the backhaul network. Furthermore, the radio base station 1 relays data that is received from the mobile phone terminal 2 that is under the control of the radio base station 1, to a relay apparatus, such as the SAE-GW, which has a connection to the core network, and relays data that is received from the relay apparatus such as the SAE-GW, to the mobile phone terminal 2 that is under the control of the radio base station 1.

The radio base station 1 may be connected to the backhaul network in a cable or radio manner. Furthermore, the radio base station 1 may be divided into two separate apparatus. One has a function of communicating with a cooperation mobile phone terminal 2 in a radio manner through the radio access network. The other performs digital signal processing and a control function. In this case, the apparatus equipped with the radio communication function is referred to as a remote radio head (RRH), and the apparatus equipped with the digital signal processing and the control function is referred to as a base band unit (BBU). The RRH may be installed in a state of being separated from the BBU, and an optical fiber may provide a connection between the RRH and the BBU in a cable manner. Furthermore, the radio base stations 1 may include not only a macro base station and a small-sized base station (including a micro base station and a femto base station), such as a pico base station, but also variously-sized base stations. Furthermore, in a case where a relay station is used that relays the radio communication between the base station and the mobile phone terminal 2, the relay station (transmission to and reception from the radio terminal and control of the transmission and reception) also may be defined as being included in the radio base station 1 in the present application.

Incidentally, a "cell" is a range of coverage (in the strict sense, there are strictly a UL cell and a DL cell, a cell is usually formed for every sector in a case where an antenna of the radio base station 1 is a sector antenna, and LTE Release 10 and later stipulate that the cell is formed for every radio career) that the radio base station 1 provides in order for the mobile phone terminal 2 to transmit and receive radio signal, but because the radio base station 1 and the cell correspond to each other to some extent, the "cell" and the "radio base station" may be interchangeably used for convenience in description in the present application.

Next, the mobile phone terminal 2 (which is referred to as a radio mobile terminal, a mobile terminal, or simply a terminal, is referred to as a user apparatus, a subscriber station, a mobile station, or the like, and is referred to as a first terminal, a first radio terminal, or the like in the present application) in FIG. 16 is an apparatus that performs the radio communication with the radio base station 1 through the radio access network. The mobile phone terminal 2 has a connection to one radio base station 1. When a radio communication situation changes, such as when the mobile phone terminal 2 moves out of the current coverage area while performing the communication, the radio base station 1 that the mobile phone terminal 2 has a connection to is changed by handover. Here, the "connection" indicates that the mobile phone terminal 2 is attached to the radio base station 1, but may be simply construed to mean that the mobile phone terminal currently performs the communication. The radio base station 1 that the mobile phone terminal 2 has a connection to is referred to as a connected radio base station 1 or a serving cell. In addition to transmitting and receiving data to and from the connected radio base station 1 through the radio communication, the mobile phone terminal 2 is controlled in various ways by exchanging various pieces of control information with the connected radio base station 1 through the radio communication.

The mobile phone terminal 2 in the present application performs not only the radio communication with the radio base station 1, but also the radio communication (inter-terminal communication) with the inter-terminal communication-intended radio terminal 3 as described below. The mobile phone terminal 2 performs the radio communication (inter-terminal communication) with the inter-terminal communication-intended radio terminal 3 based on a different radio communication scheme from a cellular radio communication scheme such as LTE. For example, radio LAN such as WiFi (a registered trademark), Bluetooth (a registered trademark), Zigbee (a registered trademark), GSM (a registered trademark, Global System for Mobile communications), Universal Mobile Telecommunications System (UMTS), infrared communication and the like can be used as the different radio communication scheme.

The mobile phone terminal 2 may be a terminal such as a mobile phone, a smartphone, a personal digital assistant (PDA), or a personal computer (PC). Furthermore, in a case where the relay station is used that relays the radio communication between the radio base station 1 and the terminal, the relay station (transmission to and reception from the radio base station and control of the transmission and reception) also may be defined as being included in the mobile phone terminal 2 in the present application.

The inter-terminal communication-intended radio terminal 3 in FIG. 16 is a radio terminal that can perform the inter-terminal communication. The inter-terminal communication-intended radio terminals 3 include, for example, an MTC terminal, a power saving terminal, an M2M terminal, mobile phone terminal, and the like. In addition, specifically, the inter-terminal communication-intended radio terminals 3 may include various measurement apparatuses, a monitoring apparatus, and the like, each of which is equipped with a radio communication function. In the present application, the inter-terminal communication-intended terminal 3 is referred to as a second terminal, a second radio terminal, or the like.

The inter-terminal communication-intended radio terminal 3 performs the radio communication (inter-terminal communication) with the mobile phone terminal 2 based on a different radio communication scheme from a cellular radio communication scheme such as LTE. For example, radio LAN such as WiFi (a registered trademark), Bluetooth (a registered trademark), Zigbee (a registered trademark), GSM (a registered trademark, Global System for Mobile communications), Universal Mobile Telecommunications System (UMTS), infrared communication and the like can be used as a different radio access network.

The radio communication system according to the present arranagement or embodiment uses an Orthogonal Frequency Division Multiple Access (OFDMA) scheme that is a DL radio access scheme. Furthermore, a Single Carrier Frequency Division Multiple Access (SC-FDMA) scheme that is a UL radio access scheme.

In the radio communication system according to the present arrangement or embodiment, a DL radio signal and a UL radio signal each are configured from a radio frame (simply referred to as a frame) with a predetermined length (for example, 10 milliseconds). In addition, one radio frame is configured from a predetermined number (for example, 10 pieces) of radio subframes (simply also referred to subframes), each with a predetermined length (for example, 1 millisecond). Then, each subframe is configured from 12 or 14 symbols. Moreover, because the "frame" and the "subframe" are only terms that indicate a unit for processing a radio signal, these may be interchangeably used below.

Several physical channels are defined in a physical layer in LTE. For example, as a DL physical channel, there are a Physical Downlink Shared CHannel (PDSCH) that is used in transmission of a DL data signal and the like, a Physical Downlink Control CHannel (PDCCH) that is used in transmission of a DL control signal, and the like. The DL control signal that is mentioned here is for transmitting control information that is desired directly for PDSCH transmission, and is a control signal at a physical layer (or Layer 1) level. In contrast, a high-layer control signal is transmitted using the PDSCH. Furthermore, as described above, in the DL subframe, a size of a control signal field is variable (1 to 3 symbols from the head of the DL subframe), a Physical Control Format Indicator CHannel (PCFICH) for notifying the size is also present in the control signal field of each DL subframe. On the other hand, as a UL physical channel, there are a Physical Uplink Shared CHannel (PUSCH) that is used in transmission of a UL data signal and the like, a Physical Uplink Control CHannel (PUCCH) that is used in transmission of a UL control signal including a response signal to the DL data signal, a result of measuring radio characteristics, or the like, and the like.

In addition to the DL data signal or the DL control signal, a DL reference signal for demodulating the DL control signal or the DL data signal or for measuring the radio characteristics, and the like are also mapped onto the DL subframe. In addition to the UL data signal or the UL control signal, a UL reference signal for demodulating the UL signal or for measuring the radio characteristics, and the like are also mapped onto the UL subframe.

### (I) Functional Configuration of Each Apparatus in the Radio Communication System according to Each Arrangement or Embodiment

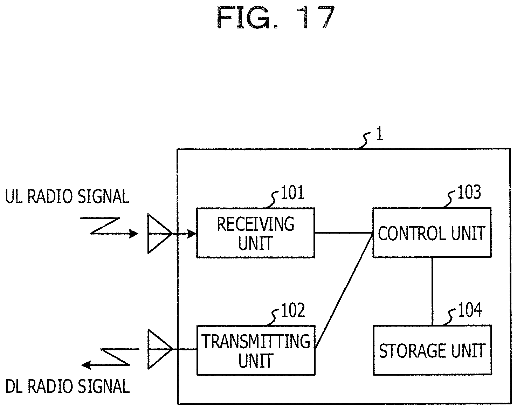

A functional configuration of each apparatus according to each arrangement or embodiment in the present application is described referring to FIGs. 17 to 19.

FIG. 17 is a diagram illustrating one example of a functional configuration of the radio base station 1 according to each arrangement or embodiment in the present application. The radio base station 1, for example, includes a receiving unit 101, a transmitting unit 102, a control unit 103, and the storage unit 104. Because they perform their respective functions in the base station, the receiving unit 101, the transmitting unit 102, the control unit 103, and the storage unit 104 may be referred to as a base-station receiving unit 101, a base-station transmitting unit 102, a base-station control unit 103, and a base-station storage unit 104, respectively.

The receiving unit 101 receives the UL radio signal (UL carrier) from the mobile phone terminal 2. Furthermore, with frequency conversion and the like, the receiving unit 101 down-converts the received UL radio signal into a baseband signal corresponding to a UL frame. For example, the receiving unit 101 can receive from the mobile phone terminal 2 radio signals corresponding to arrows each indicating a direction from the mobile phone terminal 2 to the radio base station 1 in FIG. 6 and FIGs. 10 to 15. The receiving unit 101 may receive arbitrary UL radio signals other than these from the mobile phone terminal 2.

The transmitting unit 102 transmits the DL radio signal (DL carrier) to the mobile phone terminal 2. Furthermore, with the frequency conversion and the like, the transmitting unit 102 generates the DL radio signal by up-converting the baseband signal corresponding to the DL frame. The receiving unit 102 can transmit to the mobile phone terminal 2 radio signals corresponding to arrows each indicating a direction from the radio base station 1 to the mobile phone terminal 2 in FIG. 6 and FIGs. 10 to 15. The receiving unit 102 may transmit arbitrary DL radio signals other than these to the mobile phone terminal 2.

The control unit 103 performs various control tasks or various processing tasks on the baseband signal corresponding to the UL frame. Furthermore, the control unit 103 performs various control tasks or various processing tasks and generates the baseband signal corresponding to the DL frame. The control unit 103 can store information in the storage unit 104, refer to the stored information, update the stored information, delete the stored information from the storage unit 104, and so forth, as occasion calls. For example, the control unit 103 can perform various control tasks or various processing tasks that are associated with the radio signal that the radio base station 1 transmits or receives to or from the mobile phone terminal 2 in FIG. 6 and FIGs. 10 to 15. The control unit 103 may perform arbitrary control tasks or arbitrary processing tasks other than these.

Various pieces of information are stored in the storage unit 104. For example, the radio signal that the radio base station 1 transmits or receives to or from the mobile phone terminal 2 in FIG. 6 and FIGs. 10 to 15 can be stored in the storage unit 104. Pieces of arbitrary information other than these may be stored in the storage unit 104.

Moreover, the functional configuration of the radio base station 1 according to the first arrangement is not limited to that in FIG. 17. For example, as is the case with the BBU described above, the receiving unit 101 and the transmitting unit 102 may be included. Furthermore, the radio base station 1 can be configured to include only the control unit 103.

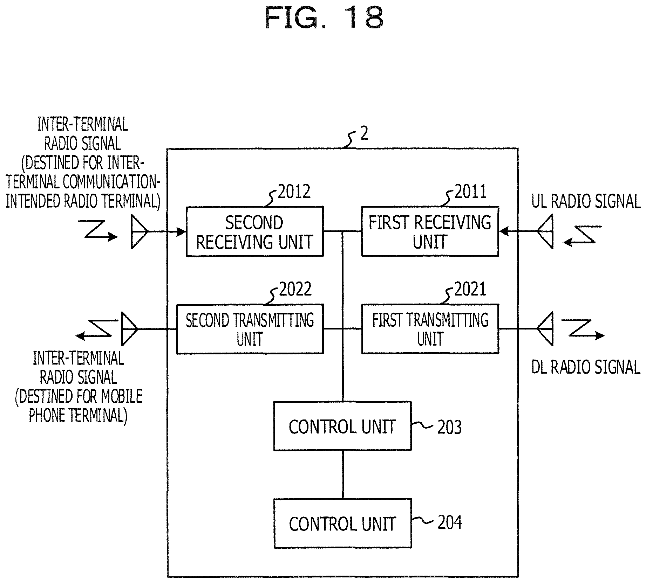

FIG. 18 is a diagram illustrating one example of a functional configuration of the mobile phone terminal 2 according to the first arrangement. The mobile phone terminal 2, for example, includes a first receiving unit 2011, a second receiving unit 2012, a first transmitting unit 2021, a second transmitting unit 2022, a control unit 203, and the storage unit 204. Here, the first receiving unit 2011 and the second receiving unit 2012 may be collectively referred to as a receiving unit 201, and the first transmitting unit 2021 and the second transmitting unit 2022 may be collectively referred to as a transmitting unit 202. Furthermore, the first receiving unit 2011 and the first transmitting unit 2021 may be collectively referred to as a base station-intended communication unit, and the second receiving unit 2012 and the second transmitting unit 2022 mat be collectively referred to as an inter-terminal communication unit. Because they perform their respective functions in the mobile phone terminal, the receiving unit 201, the transmitting unit 202, the control unit 203, and the storage unit 204 may be referred to as a mobile phone-terminal receiving unit 201, a mobile phone-terminal transmitting unit 202, a mobile phone-terminal control unit 203, and a mobile phone-terminal storage unit 204, respectively.

The first receiving unit 2011 receives the DL radio signal from the radio base station 1. Furthermore, with the frequency conversion and the like, the first receiving unit 2011 down-converts the received DL radio signal into the baseband signal corresponding to the DL frame. For example, the first receiving unit 2011 can receive from the radio base station 1 the DL radio signals corresponding to the arrows each indicating the direction from the radio base station 1 to the mobile phone terminal 2 in FIG. 6 and FIGs. 10 to 15. The first receiving unit 2011 may receive arbitrary DL radio signals other than these from the radio base station 1.

The second receiving unit 2012 receives an inter-terminal radio signal destined for the mobile phone terminal 2 from the inter-terminal communication-intended radio terminal 3. Furthermore, with the frequency conversion and the like, the second receiving unit 2012 up-converts the received inter-terminal radio signal destined for the mobile phone terminal 2 into the baseband signal corresponding to a mobile phone-destined frame. For example, the second receiving unit 2012 can receive from the inter-terminal communication-intended radio terminal 3 the inter-terminal radio signals destined for the mobile phone terminal 2, which correspond to the arrows each indicating the direction from the inter-terminal communication-intended radio terminal 3 to the mobile phone terminal 2 in FIG. 6 and FIGs. 10 to 15. The second receiving unit 2012 may receive from the inter-terminal communication-intended radio terminal 3 arbitrary inter-terminal radio signals destined for the mobile phone terminal 2 other than these.

The first transmitting unit 2021 transmits the UL radio signal to the radio base station 1. Furthermore, with the frequency conversion and the like, the first transmitting unit 2021 generates the UL radio signal by up-converting the baseband signal corresponding to the UL frame. For example, the first transmitting unit 2021 can transmit to the radio base station 1 the UL radio signals corresponding to the arrows each indicating the direction from the mobile phone terminal 2 to the radio base station 1 in FIG. 6 and FIGs. 10 to 15. The first transmitting unit 2021 may transmit arbitrary UL radio signals other than these to the radio base station 1.

The second transmitting unit 2022 transmits the inter-terminal radio signal destined for the inter-terminal communication-intended radio terminal 3 to the inter-terminal communication-intended radio terminal 3. Furthermore, with the frequency conversion and the like, the second transmitting unit 2022 generates the inter-terminal radio signal destined for the inter-terminal communication-intended radio terminal 3 by up-converting the baseband signal corresponding to the frame destined for the inter-terminal communication-intended radio terminal 3. For example, the second transmitting unit 2022 can transmit to the inter-terminal communication-intended radio terminal 3 the inter-terminal radio signals corresponding to the arrows each indicating the direction from the mobile phone terminal 2 to the inter-terminal communication-intended radio terminal 3 in FIG. 6 and FIGs. 10 to 15. The second transmitting unit 2022 may transmit arbitrary inter-terminal radio signals destined for the inter-terminal communication-intended radio terminal 3 other than these to the inter-terminal communication-intended radio terminal 3.

The control unit 203 performs various control tasks or various processing tasks on the baseband signal corresponding to the DL frame or on the frame destined for the mobile phone terminal 2. Furthermore, the control unit 203 performs various control tasks or various processing tasks, and generates the baseband signal corresponding to the DL frame or the frame destined for the inter-terminal communication-intended radio terminal. The control unit 203 can store information in the storage unit 204, refer to the stored information, update the stored information, delete the stored information from the storage unit 204, and so forth, as occasion calls. For example, the control unit 203 can perform each control task or each processing task that is associated with the radio signal that the mobile phone terminal 2 transmits or receives to or from the radio base station 1 and with the radio signal that the mobile phone terminal 2 transmits or receive or to or from the inter-terminal communication-intended radio terminal 3 in FIG. 6 and FIGs. 10 to 15. The control unit 203 may perform arbitrary control tasks or arbitrary processing tasks other than these.

Various pieces of information are stored in the storage unit 204. For example, the radio signal that the mobile phone terminal 2 transmits or receives to or from the radio base station 1 and the radio signal that the mobile phone terminal 2 transmits or receives to or from the inter-terminal communication-intended radio terminal 3, in FIG. 6 and FIGs. 10 to 15, can be stored in the storage unit 204. Pieces of arbitrary information other than these may be stored in the storage unit 204.

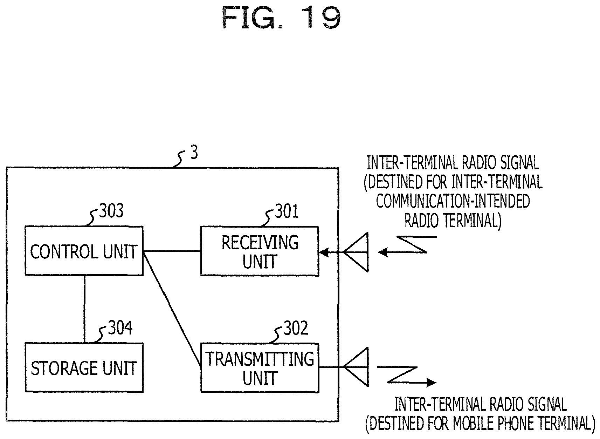

FIG. 19 is a diagram illustrating one example of a functional configuration of the inter-terminal communication-intended radio terminal 3 according to each arrangement or embodiment in the present application. The inter-terminal communication-intended radio terminal 3, for example, includes a receiving unit 301, a transmitting unit 302, a control unit 303, and a storage unit 304. Because they performs their respective functions in the inter-terminal communication-intended radio terminal 3, the receiving unit 301, the transmitting unit 302, the control unit 303, and the storage unit 304 may be referred to as an inter-terminal communication-intended radio-terminal receiving unit 301, an inter-terminal communication-intended radio-terminal transmitting unit 302, an inter-terminal communication-intended radio-terminal control unit 303, and an inter-terminal communication-intended radio-terminal storage unit 304, respectively.

The receiving unit 301 receives the inter-terminal radio signal destined for the inter-terminal communication-intended radio terminal 3 from the mobile phone terminal 2. Furthermore, with the frequency conversion and the like, the receiving unit 301 down-converts the received inter-terminal radio signal destined for the inter-terminal communication-intended radio terminal 3 into the baseband signal corresponding to the frame destined for the inter-terminal communication-intended radio terminal 3. For example, the receiving unit 301 can receive from the mobile phone terminal 2 the inter-terminal radio signals destined for the inter-terminal communication-intended radio terminal 3, which correspond to the arrows each indicating the direction from the mobile phone terminal 2 to the inter-terminal communication-intended radio terminal 3 in FIG. 6 and FIGs. 10 to 15. The receiving unit 301 may receive arbitrary inter-terminal radio signals destined for the inter-terminal communication-intended radio terminal 3 from the mobile phone terminal 2.

The transmitting unit 302 transmits the inter-terminal radio signal destined for the mobile phone terminal 2 to the mobile phone terminal 2. Furthermore, with the frequency conversion and the like, the transmitting unit 302 generates the inter-terminal radio signal destined for the mobile phone terminal 2 by up-converting the baseband signal corresponds to the frame destined for the mobile phone terminal 2. For example, the transmitting unit 302 can transmit to the mobile phone terminal 2 to the inter-terminal radio signals destined for the mobile phone terminal 2, which correspond to the arrows each indicating the direction from the inter-terminal communication-intended radio terminal 3 to the mobile phone terminal 2 in FIG. 6 and FIGs. 10 to 15. The transmitting unit 302 may transmit arbitrary inter-terminal radio signals destined for the mobile phone terminal 2 other than these to the mobile phone terminal 2.

The control unit 303 performs various control tasks or various processing tasks on the baseband signal corresponding to the frame destined for the inter-terminal communication-intended radio terminal 3. Furthermore, the control unit 303 performs various control tasks or various processing tasks, and generates the baseband signal corresponding to the frame destined for the mobile phone terminal 2. The control unit 303 can store information in the storage unit 304, refer to the stored information, update the stored information, delete the stored information from the storage unit 304, and so forth, as occasion calls. For example, the control unit 303 can perform each control task or each processing task that is associated with the radio signal that the inter-terminal communication-intended radio terminal 3 transmit or receives to or from the mobile phone terminal 2 in FIG. 6 and FIGs. 10 to 15. The control unit 303 may perform arbitrary control tasks or arbitrary processing tasks other than these.

Various pieces of information are stored in the storage unit 304. For example, the radio signal that the inter-terminal communication-intended radio terminal 3 transmits or receives to or from the mobile phone terminal 2 in FIG. 6 and FIGs. 10 to 15 can be stored in the storage unit 304. Pieces of arbitrary information other than these may be stored in the storage unit 304.

### (m) Hardware Configuration of Each Apparatus in the Radio Communication System according to Each Arrangement or Embodiment

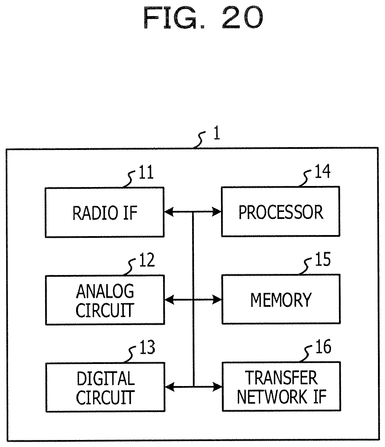

Last, a hardware configuration of each apparatus in the radio communication system according to each arrangement or embodiment will be described referring to FIGs. 20 to 22.

FIG. 20 illustrates one example of the hardware configuration of the radio base station 1 according to each arrangement or embodiment. Each function of the radio base station 1, which is described above, is realized by some or all hardware components described below. The radio base station 1 according to the arrangement or embodiment described above includes a radio IF (interface) 11, an analog circuit 12, a digital circuit 13, a processor 14, a memory 15, a transfer network IF 16, and the like.

The radio IF 11 is an interface device for performing the radio communication with the mobile phone terminal 2, and, for example, is an antenna. The analog circuit 12 is a circuit that processes an analog signal, and can be broadly categorized into three types. One type performs receiving processing, another type performs transmitting processing, and the third type performs other processing. The analog circuits 12 that perform the receiving processing include, for example, a low noise amplifier (LNA), a band pass filter (BPF), a mixer, a low pass filter (LPF), an automatic gain controller (AGC), an analog-to-digital converter (ADC), a phase locked loop (PLL), and the like. The analog circuits 12 that perform the transmitting processing include, for example, a power amplifier (PA), a BPF, a mixer, an LPF, a digital-to-analog converter (DAC), a PLL, and the like. The analog circuits 12 that perform other processing include a duplexer and the like.

The digital circuit 13 is a circuit that processes a digital signal. For example, the digital circuits include an application specific integrated circuit (ASIC), a field-programming gate array (FPGA), a large scale integration (LSI), and the like. The processor 14 is a device that processes data. For example, the processors 14 include a central processing unit (CPU), a digital signal processor (DSP), and the like. The memory 15 is a device in which data is stored. For example, the memories 15 include a read only memory (ROM), a random access memory (RAM), and the like. The transfer network IF 16 is an interface device for establishing a connection to the backhaul network in a cable or radio manner and performing, in a cable or radio manner, the radio communication with an apparatus at the transfer network side, which includes a different radio base station 1 that is connected to the backhaul network or the core network.

A correspondence relationship between the functional configuration and the hardware configuration of the radio base station 1 will be described.

The receiving unit 101 is realized, for example, by the radio IF 11 and the analog circuit 12 (which performs the receiving processing). That is, the radio IF 11 receives the UL radio signal (UL carrier) from the mobile phone terminal 2, and, with the frequency conversion and the like, the analog circuit 12 down-converts the received UL radio signal into the baseband signal corresponding to the UL frame.

The transmitting unit 102 is realized, for example, by the radio IF 11 and the analog circuit 12 (which performs the transmitting processing). That is, with the frequency conversion and the like, the analog circuit 12 generates the DL radio signal by up-converting the baseband signal corresponding to the DL frame, and the radio IF 11 transmits the DL radio signal (DL carrier) to the mobile phone terminal 2. Moreover, the receiving unit 101 and the transmitting unit 102 may be realized by different radio IFs 11 (antennas), but may share one radio IF 11 by using the duplexer that is the analog circuit 12.

The control unit 103 is realized, for example, by the processor 14 and the digital circuit 13. That is, the processor 14 operates in cooperation with the digital circuit 13 as occasion calls, performs various control tasks or various processing tasks on the baseband signal corresponding to the UL frame, and performs various control tasks or various processing tasks and thus generates the baseband signal corresponding to the DL frame. Specifically, the processor 14 can operate in cooperation with the digital circuit 13 as occasion calls, and perform each control task or each processing task that is associated with the radio signal that the radio base station 1 transmits or receives or to or from the mobile phone terminal 2 in FIG. 6 and FIGs. 10 to 15. The processor 14 may operate in cooperation with the digital circuit 13 as occasion calls, and may perform arbitrary control tasks or arbitrary processing tasks other than these.

The storage unit 104 is realized, for example, by the memory 15. That is, various pieces of information are stored in the memory 15. Specifically, the radio signal that the radio base station 1 transmits or receive to and from the mobile phone terminal 2 in FIG. 6 and FIGs. 10 to 15 can be stored in the memory 15. Pieces of arbitrary information other than these may be stored in the memory 15.

Moreover, the hardware configuration of the radio base station 1 according to the first arrangement is not limited to that in FIG. 20. For example, as is the case with the BBU described above, the radio IF 11 and the analog circuit 12 may not be included and only the radio IF 11 may be configured not to be included. Furthermore, the radio base station 1 can be defined as being configured to include only the processor 14 and the memory 15, and can be defined as being configured to include only the digital circuit 13.

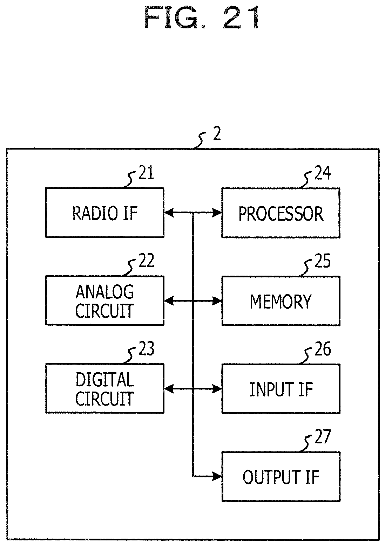

FIG. 21 illustrates one example of a hardware configuration of the mobile phone terminal 2 according to each arrangement or embodiment described. Each function of the mobile phone terminal 2 is realized as some or all hardware components described below. The mobile phone terminal 2 according to the arrangement or embodiment described above include a radio IF 21, an analog circuit 22, the digital circuit 23, a processor 24, a memory 25, an input IF 26, an output IF 27, and the like.

The radio IF 21 is an interface device for performing the radio communication between the radio base station 1 and the inter-terminal communication-intended radio terminal 3 and, for example, is an antenna. The radio IF 21 for performing the communication with the radio base station 1 and the radio IF 21 for performing the communication with the inter-terminal communication-intended radio terminal 3 may be different antennas, and may be the same antenna. The analog circuit 22 is a circuit that processes an analog signal, and can be broadly categorized into three types. One type performs receiving processing, another type performs transmitting processing, and the third type performs other processing. The analog circuits 22 that perform the receiving processing include, for example an LNA, a BPF, a mixer, an LPF, an AGC, an ADC, a PLL, and the like. The analog circuits 22 that perform the transmitting processing include, for example, a PA, a BPF, a mixer, an LPF, a DAC, a PLL, and the like. The analog circuits 22 that performs other processing include a duplexer and the like. The digital circuits 23 include, for example, an LSI, an FPGA, an ASIC, and the like. The processor 24 is a device that processes data. The processors 24 include a CPU, a DSP, and the like. The memory 25 is a device in which data is stored. The memories 25 include, for example, a ROM, a RAM, and the like. The input IF 26 is a device that performs inputting. The input IFs 26 include, for example, an operation button, a mouse, and the like. The output IF 27 is a device that performs outputting. The output IFs 27 include, for example, a display, a speaker, and the like.

A correspondence relationship between the functional configuration and the hardware configuration of the mobile phone terminal 2 will be described.

The first receiving unit 2011 is realized, for example, by the radio IF 21 and the analog circuit 22 (which performs the receiving processing). That is, the radio IF 21 receives the DL radio signal (DL carrier) from the radio base station 1, and, with the frequency conversion and the like, the analog circuit 22 down-converts the received DL radio signal into the baseband signal corresponding to the DL frame. Furthermore, the second receiving unit 2012 is realized, for example, by the radio IF 21 and the analog circuit 22 (which performs the receiving processing). That is, the radio IF 21 receives the inter-terminal radio signal destined for the mobile phone terminal 2 from the inter-terminal communication-intended radio terminal 3, and, with the frequency conversion and the like, the analog circuit 22 down-converts the received the inter-terminal radio signal destined for the mobile phone terminal 2 into the baseband signal corresponding to the frame destined for the mobile phone terminal 2. Moreover, as described above, the radio IF 21 that realizes the first receiving unit 2011 and the radio IF 21 that realizes the second receiving unit 2012 may be different antennas and may be the same antenna.

The first transmitting unit 2021 is realized, for example, by the radio IF 21 and the analog circuit 22 (which performs the transmitting processing). That is, with the frequency conversion and the like, the analog circuit 22 generates the UL radio signal by up-converting the baseband signal corresponding to the UL frame, and the radio IF 21 transmits the UL radio signal (UL carrier) to the radio base station 1. Furthermore, the second transmitting unit 2022 is realized, for example, by the radio IF 21 and the analog circuit 22 (which performs the transmitting processing). That is, with the frequency conversion and the like, the analog circuit 22 generates the inter-terminal radio signal destined for the inter-terminal communication-intended terminal 3 by up-converting the baseband signal corresponding to the frame destined for the inter-terminal communication-intended radio terminal 3, and the radio IF 21 transmits the inter-terminal radio signal destined for the inter-terminal communication-intended terminal 3 to the inter-terminal communication-intended radio terminal 3. Moreover, as described above, the radio IF 21 that realizes the first transmitting unit 2021 and the radio IF 21 that realizes the second transmitting unit 2022 may be different antennas and may be the same antenna.

Here, the first receiving unit 2011 and the first transmitting unit 2021 may be realized by different radio IFs 21 (antennas), but may share one radio IF 21 by using the duplexer that is the analog circuit 22. Furthermore, the second receiving unit 2012 and the second transmitting unit 2022 may be realized by different radio IFs 21 (antennas), but may share one radio IF 21 by using the duplexer that is the analog circuit 22. In addition, the first receiving unit 2011, the first transmitting unit 2021, the second receiving unit 2012, and the second transmitting unit 2022 may share one radio IF 21 by using the duplexer that is the analog circuit 22.

The control unit 203 is realized, for example, by the processor 24 and the digital circuit 23. That is, the processor 24 operates in cooperation with the digital circuit 23 as occasion calls, performs various control tasks or various processing tasks on the baseband signal corresponding to the DL frame, and performs various control tasks or various processing tasks and thus generates the baseband signal corresponding to the UL frame. Specifically, the processor 24 can operate in cooperation with the digital circuit 23 as occasion calls, and perform each control task or each processing task that is associated with the radio signal that the mobile phone terminal 2 transmits or receives or to or from the radio base station 1 in FIG. 6 and FIGs. 10 to 15. Furthermore, the processor 24 operates in cooperation with the digital circuit 23 as occasion calls, performs various control tasks or various processing tasks on the baseband signal corresponding to the frame destined for the mobile phone terminal 2, and performs various control tasks or various processing tasks and thus generates the baseband signal corresponding to the frame destined for the inter-terminal communication-intended radio terminal 3. Specifically, the processor 24 can operate in cooperation with the digital circuit 23 as occasion calls, and perform each control task or each processing task that is associated with the radio signal that the mobile phone terminal 2 transmits or receives or to or from the inter-terminal communication-intended radio terminal 3 in FIG. 6 and FIGs. 10 to 15. The processor 24 may operate in cooperation with the digital circuit 23 as occasion calls, and may perform arbitrary control tasks or arbitrary processing tasks other than these.

The storage unit 204 is realized, for example, by the memory 25. That is, various pieces of information are stored in the memory 25. Specifically, the radio signal that the mobile phone terminal 2 transmits or receive to and from the radio base station 1 in FIG. 6 and FIGs. 10 to 15 can be stored in the memory 25. Furthermore, the radio signal that the mobile phone terminal 2 transmits or receive to and from the inter-terminal communication-intended radio terminal 3 in FIG. 6 and FIGs. 10 to 15 can be stored in the memory 25. Pieces of arbitrary information other than these may be stored in the memory 25.

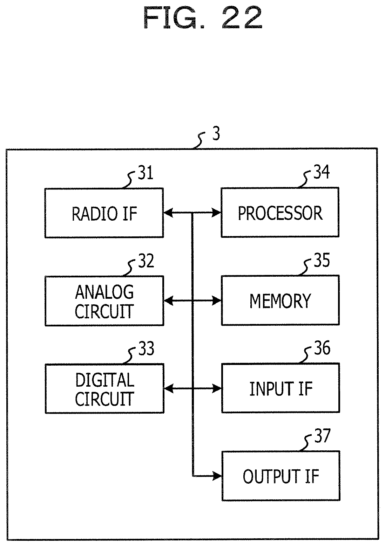

FIG. 22 illustrates one example of a hardware configuration of the inter-terminal communication-intended radio terminal 3 according to each arrangement or embodiment described above. Each function of the inter-terminal communication-intended radio terminal 3 described above is realized by some or all hardware components described below. The inter-terminal communication-intended radio terminal 3 according to the arrangement or embodiment described above includes a radio IF 31, an analog circuit 32, a digital circuit 33, a processor 34, a memory 35, an input IF 36, an output IF 37, and the like.

The radio IF 31 is an interface device for performing the radio communication with the mobile phone terminal 2, and, for example, is an antenna. The analog circuit 32 is a circuit that processes an analog signal, and can be broadly categorized into three types. One type performs receiving processing, another type performs transmitting processing, and the third type performs other processing. The analog circuits 32 that perform the receiving processing include, for example an LNA, a BPF, a mixer, an LPF, an AGC, an ADC, a PLL, and the like. The analog circuits 32 that perform the transmitting processing include, for example, a PA, a BPF, a mixer, an LPF, a DAC, a PLL, and the like. The analog circuits 32 that perform other processing include a duplexer and the like. The digital circuits 33 include, for example, an LSI, an FPGA, an ASIC, and the like. The processor 34 is a device that processes data. The processors 34 include a CPU, a DSP, and the like. The memory 35 is a device in which data is stored. The memories 35 include, for example, a ROM, a RAM, and the like. The input IF 36 is a device that performs inputting. The input IFs 36 include, for example, an operation button, a mouse, and the like. The output IF 37 is a device that performs outputting. The output IFs 37 include, for example, a display, a speaker, and the like.

A correspondence relationship between the functional configuration and the hardware configuration of the inter-terminal communication-intended radio terminal 3 will be described.

The receiving unit 301 is realized, for example, by the radio IF 31 and the analog circuit 32 (which performs the receiving processing). That is, the radio IF 31 receives the inter-terminal radio signal destined for the inter-terminal communication-intended terminal 3 from the mobile phone terminal 2, and, with the frequency conversion and the like, the analog circuit 32 down-converts the received inter-terminal radio signal destined for the inter-terminal communication-intended terminal 3 into the baseband signal corresponding to the frame destined for the inter-terminal communication-intended radio terminal 3.

The transmitting unit 302 is realized, for example, by the radio IF 31 and the analog circuit 32 (which performs the transmitting processing). That is, with the frequency conversion and the like, the analog circuit 32 generates the inter-terminal radio signal destined for the mobile phone terminal 2 by up-converting the baseband signal corresponding to the frame destined for the mobile phone terminal 2, and the radio IF 31 transmits the inter-terminal radio signal destined for the mobile phone terminal 2 to the mobile phone terminal 2. Moreover, the receiving unit 301 and the transmitting unit 302 may be realized by different radio IFs 31 (antennas), but may share one radio IF 31 by using the duplexer that is the analog circuit 32.

The control unit 303 is realized, for example, by the processor 34 and the digital circuit 33. That is, the processor 34 operates in cooperation with the digital circuit 33 as occasion calls, performs various control tasks or various processing tasks on the baseband signal corresponding to the frame destined for the inter-terminal communication-intended radio terminal 3, and performs various control tasks or various processing tasks and thus generates the baseband signal corresponding to the frame destined for the mobile phone terminal 2. Specifically, the processor 34 can operate in cooperation with the digital circuit 33 as occasion calls, and perform each control task or each processing task that is associated with the radio signal that the inter-terminal communication-intended radio terminal 3 transmits or receives or to or from the mobile phone terminal 2 in FIG. 6 and FIGs. 10 to 15. The processor 34 may operate in cooperation with the digital circuit 33 as occasion calls, and may perform arbitrary control tasks or arbitrary processing tasks other than these.

The storage unit 304 is realized, for example, by the memory 35. That is, various pieces of information are stored in the memory 35. Specifically, the radio signal that the inter-terminal communication-intended radio terminal 3 transmits or receive to and from the mobile phone terminal 2 in FIG. 6 and FIGs. 10 to 15 can be stored in the memory 35. Pieces of arbitrary information other than these may be stored in the memory 35.

### Reference Signs List

1: RADIO BASE STATION
2: MOBILE PHONE TERMINAL
3: INTER-TERMINAL COMMUNICATION-INTENDED RADIO TERMINAL

## Claims

1. A radio communication method comprising:
allocating, by a radio base station (1), a second radio resource that is to be used in communication among a plurality of radio terminals including a first radio terminal (3) and a second radio terminal (2), from a first radio resource that is prepared for communication between the radio base station and a radio terminal; and
when the second radio terminal (2) has data for the first radio terminal (3), transmitting a preparation signal (S821) from the second radio terminal using part of the second radio resource, the preparation signal being a signal for preparing to transmit the data that is transmitted using a radio resource notified (S821) in the preparation signal from the second radio terminal to the first radio terminal, the notified radio resource being part of the second radio resource.

2. The radio communication method according to claim 1, wherein
the first radio resource includes a radio resource for a radio resource request, and
the radio base station (1) allocates the second radio resource from the radio resource for the radio resource request.

3. The radio communication method according to claim 1, wherein
one radio terminal of the first radio terminal (3) and the second radio terminal (2) performs communication with the radio base station without going through another radio terminal, and
the other radio terminal of the first radio terminal and the second radio terminal performs the communication with the radio base station (1) via the one radio terminal.

4. The radio communication method according to claim 3, wherein
the first radio terminal returns from a power saving state in response to the preparation signal being received.

5. A radio communication system comprising:
a radio base station configured to allocate a second radio resource that is to be used in communication among a plurality of radio terminals including a first radio terminal and a second radio terminal, from a first radio resource that is prepared for communication between the radio base station and a radio terminal; and
the second radio terminal configured to transmit, when the second radio terminal has data for the first radio terminal, a preparation signal using part of the second radio resource, the preparation signal being a signal for preparing to transmit the data that is transmitted using a radio resource notified in the preparation signal from the second radio terminal to the first radio terminal, the notified radio resource being part of the second radio resource.

6. The radio communication system according to claim 5, wherein
the first radio resource includes a radio resource for a radio resource request, and
the radio base station allocates the second radio resource from the radio resource for the radio resource request.

7. A radio terminal comprising:
a control unit configured to be allocated, by a radio base station, a second radio resource that is to be used in communication among a plurality of radio terminals including the radio terminal and another radio terminal, from a first radio resource that is prepared for communication between the radio base station and a radio terminal, and to transmit, when the radio terminal has data for the other radio terminal, a preparation signal using part of the second radio resource, the preparation signal being a signal for preparing to transmit the data that is transmitted using a radio resource notified in the preparation signal from the radio terminal to the other radio terminal, the notified radio resource being part of the second radio resource.

8. The radio terminal according to claim 7, wherein
the first radio resource includes a radio resource for a radio resource request, and
the radio base station allocates the second radio resource from the radio resource for the radio resource request.

9. The radio terminal according to claim 8, wherein the first radio resource is a radio resource for uplink transmission.

## Patentansprüche

1. Funkkommunikationsverfahren, umfassend:
Zuweisen einer zweiten Funkressource, die zur Kommunikation mit einer Vielzahl von Funkendgeräten, beinhaltend ein erstes Funkendgerät (3) und ein zweites Funkendgerät (2), verwendet werden soll, von einer ersten Funkressource (1), die für die Kommunikation zwischen einer Funkbasisstation und einem Funkendgerät vorbereitet ist, durch die Funkbasisstation; und
Übertragen eines Vorbereitungssignals (S821) von dem zweiten Funkendgerät unter Verwendung eines Teils der zweiten Funkressource, wenn das zweite Funkendgerät (2) Daten für das erste Funkendgerät (3) hat, wobei das Vorbereitungssignal ein Signal zum Vorbereiten der Übertragung der Daten ist, die unter Verwendung einer in dem Vorbereitungssignal des zweiten Funkendgeräts an das erste Funkendgerät notifizierten (S821) Funkressource übertragen werden, wobei die notifizierte Funkressource Teil der zweiten Funkressource ist.

2. Funkkommunikationsverfahren nach Anspruch 1, wobei
die erste Funkressource eine Funkressource für eine Funkressourcenanforderung beinhaltet und die Funkbasisstation (1) die zweite Funkressource von der Funkressource für die Funkressourcenanforderung zuweist.

3. Funkkommunikationsverfahren nach Anspruch 1, wobei
ein Funkendgerät des ersten Funkendgeräts (3) und des zweiten Funkendgeräts (2) die Kommunikation mit der Funkbasisstation ohne Verwendung eines anderen Funkendgeräts durchführt und
das andere Funkendgerät des ersten Funkendgeräts und des zweiten Funkendgeräts die Kommunikation mit der Funkbasisstation (1) über das eine Funkendgerät durchführt.

4. Funkkommunikationsverfahren nach Anspruch 3, wobei
das erste Funkendgerät als Reaktion auf das empfangene Vorbereitungssignal aus einem Energiesparzustand zurückkehrt.

5. Funkkommunikationssystem, umfassend:
eine Funkbasisstation, die zum Zuweisen einer zweiten Funkressource, die zur Kommunikation mit einer Vielzahl von Funkendgeräten, beinhaltend ein erstes Funkendgerät und ein zweites Funkendgerät, verwendet werden soll, von einer ersten Funkressource, die für die Kommunikation zwischen der Funkbasisstation und einem Funkendgerät vorbereitet ist, ausgelegt ist; und
das zweite Funkendgerät, das zum Übertragen eines Vorbereitungssignals unter Verwendung eines Teils der zweiten Funkressource ausgelegt ist, wenn das zweite Funkendgerät Daten für das erste Funkendgerät hat, wobei das Vorbereitungssignal ein Signal zum Vorbereiten der Übertragung der Daten ist, die unter Verwendung einer in dem Vorbereitungssignal des zweiten Funkendgeräts an das erste Funkendgerät notifizierten Funkressource übertragen werden, wobei die notifizierte Funkressource Teil der zweiten Funkressource ist.

6. Funkkommunikationssystem nach Anspruch 5,
wobei die erste Funkressource eine Funkressource für eine Funkressourcenanforderung beinhaltet und
die Funkbasisstation die zweite Funkressource von der Funkressource für die Funkressourcenanforderung zuweist.

7. Funkendgerät, umfassend:
eine Steuereinheit, die zum Zuweisen einer zweiten Funkressource, die zur Kommunikation mit einer Vielzahl von Funkendgeräten, beinhaltend das Funkendgerät und ein anderes Funkendgerät, verwendet werden soll, von einer ersten Funkressource, die für die Kommunikation zwischen einer Funkbasisstation und einem Funkendgerät vorbereitet ist, von der Funkbasisstation und zum Übertragen eines Vorbereitungssignals unter Verwendung eines Teils der zweiten Funkressource ausgelegt ist, wenn das Funkendgerät Daten für das andere Funkendgerät hat, wobei das Vorbereitungssignal ein Signal zum Vorbereiten der Übertragung der Daten ist, die unter Verwendung einer in dem Vorbereitungssignal des Funkendgeräts an das andere Funkendgerät notifizierten Funkressource übertragen werden, wobei die notifizierte Funkressource Teil der zweiten Funkressource ist.

8. Funkendgerät nach Anspruch 7, wobei
die erste Funkressource eine Funkressource für eine Funkressourcenanforderung beinhaltet und die Funkbasisstation die zweite Funkressource von der Funkressource für die Funkressourcenanforderung zuweist.

9. Funkendgerät nach Anspruch 8, wobei die erste Funkressource eine Funkressource für die Uplink-Übertragung ist.

## Revendications

1. Procédé de radiocommunication comprenant les étapes ci-dessous consistant à :
affecter, par le biais d'une station de base radio (1), une seconde ressource radio qui doit être utilisée dans le cadre d'une communication entre une pluralité de terminaux radio, incluant un premier terminal radio (3) et un second terminal radio (2), à partir d'une première ressource radio qui est préparée en vue de la communication entre la station de base radio et un terminal radio ; et
lorsque le second terminal radio (2) présente des données pour le premier terminal radio (3), transmettre un signal de préparation (S821) à partir du second terminal radio, en utilisant une partie de la seconde ressource radio, le signal de préparation étant un signal destiné à préparer la transmission des données qui sont transmises en utilisant une ressource radio notifiée (S821) dans le signal de préparation, du second terminal radio au premier terminal radio, la ressource radio notifiée faisant partie de la seconde ressource radio.

2. Procédé de radiocommunication selon la revendication 1, dans lequel :
la première ressource radio inclut une ressource radio pour une demande de ressource radio ; et
la station de base radio (1) affecte la seconde ressource radio à partir de la ressource radio pour la demande de ressource radio.

3. Procédé de radiocommunication selon la revendication 1, dans lequel :
un terminal radio, parmi le premier terminal radio (3) et le second terminal radio (2), met en oeuvre une communication avec la station de base radio, sans passer par un autre terminal radio ; et
l'autre terminal radio, parmi le premier terminal radio et le second terminal radio, met en oeuvre la communication avec la station de base radio (1), par l'intermédiaire dudit un terminal radio.

4. Procédé de radiocommunication selon la revendication 3, dans lequel :
le premier terminal radio revient d'un état d'économie d'énergie en réponse à la réception du signal de préparation.

5. Système de radiocommunication comprenant :
une station de base radio configurée de manière à affecter une seconde ressource radio qui doit être utilisée dans le cadre d'une communication entre une pluralité de terminaux radio, incluant un premier terminal radio et un second terminal radio, à partir d'une première ressource radio qui est préparée en vue de la communication entre la station de base radio et un terminal radio ; et
dans lequel le second terminal radio est configuré de manière à transmettre, lorsque le second terminal radio présente des données pour le premier terminal radio, un signal de préparation, en utilisant une partie de la seconde ressource radio, le signal de préparation étant un signal destiné à préparer la transmission des données qui sont transmises en utilisant une ressource radio notifiée dans le signal de préparation, du second terminal radio au premier terminal radio, la ressource radio notifiée faisant partie de la seconde ressource radio.

6. Système de radiocommunication selon la revendication 5, dans lequel :
la première ressource radio inclut une ressource radio pour une demande de ressource radio ; et
la station de base radio affecte la seconde ressource radio à partir de la ressource radio pour la demande de ressource radio.

7. Terminal radio comprenant :
une unité de commande configurée de manière à se voir affecter, par une station de base radio, une seconde ressource radio qui doit être utilisée dans le cadre d'une communication entre une pluralité de terminaux radio, incluant le terminal radio et un autre terminal radio, à partir d'une première ressource radio qui est préparée en vue d'une communication entre la station de base radio et un terminal radio, et à transmettre, lorsque le terminal radio présente des données pour l'autre terminal radio, un signal de préparation, en utilisant une partie de la seconde ressource radio, le signal de préparation étant un signal destiné à préparer la transmission des données qui sont transmises en utilisant une ressource radio notifiée dans le signal de préparation, du terminal radio à l'autre terminal radio, la ressource radio notifiée faisant partie de la seconde ressource radio.

8. Terminal radio selon la revendication 7, dans lequel :
la première ressource radio inclut une ressource radio pour une demande de ressource radio ; et
la station de base radio affecte la seconde ressource radio à partir de la ressource radio pour la demande de ressource radio.

9. Terminal radio selon la revendication 8, dans lequel la première ressource radio est une ressource radio pour une transmission en liaison montante.
